# EUROPEAN PATENT APPLICATION

(11) **EP 4 564 149 A1**
(43) Date of publication of application: **04.06.2025**
(21) Application number: 24763088.2
(22) Date of filing: 26.02.2024
(51) Int. Cl.: G06F 3/04845

(54) **GRAPHIC DISPLAY METHOD BASED ON MULTIPLE OPERATING SYSTEMS, AND RELATED APPARATUS**

(30) Priority: 28.02.2023 CN 202310216037; 10.03.2023 CN 202310269901
(71) Applicant: Huawei Technologies Co., Ltd., Shenzhen, Guangdong 518129 (CN)
(72) Inventor: HUANG, Ganzhong, Shenzhen, Guangdong 518129 (CN); CHEN, Zhibin, Shenzhen, Guangdong 518129 (CN); ZHANG, Shilong, Shenzhen, Guangdong 518129 (CN); ZHAN, Zehui, Shenzhen, Guangdong 518129 (CN); WEI, Guoning, Shenzhen, Guangdong 518129 (CN)
(74) Representative: Grünecker Patent- und Rechtsanwälte PartG mbB
(86) International application number: PCT/CN2024/078567
(87) International publication number: WO 2024/179406

(57) **Abstract**

This application provides a multi-operating system-based graphics display method and a related apparatus. An electronic device may include one host OS and at least one guest OS. The host OS may map a rendering device and a graphics memory to the guest OS. The guest OS may directly access the rendering device and the graphics memory to perform rendering and layer composition, and then submit a composed layer to the host OS to complete composition and display of application windows of a guest-side app and a host-side app. According to the foregoing method, the guest-side app can support a high refresh rate during running, to achieve and approach running effect of the host-side app, and improve screen viewing experience of a user when using the guest-side app.

## Description

This application claims priority to Chinese Patent Application No. 202310216037.7, filed with the China National Intellectual Property Administration on February 28, 2023 and entitled "MULTI-OPERATING SYSTEM-BASED GRAPHICS DISPLAY METHOD AND RELATED APPARATUS", and to Chinese Patent Application No. 202310269901.X, filed with the China National Intellectual Property Administration on March 10, 2023 and entitled "MULTI-OPERATING SYSTEM-BASED GRAPHICS DISPLAY METHOD AND RELATED APPARATUS", both of which are incorporated herein by reference in their entireties.

### TECHNICAL FIELD

This application relates to the field of terminal technologies, and in particular, to a multi-operating system-based graphics display method and a related apparatus.

### BACKGROUND

With development of electronic devices, many electronic devices each can run a plurality of operating systems on the electronic device by using a virtualization technology. In the virtualization technology, various physical resources (such as a processor, a storage, a magnetic disk, and a network adapter) of the electronic device may be abstracted, converted, and presented, and may be divided and combined into one or more computer configuration environments. The electronic device configured with the plurality of operating systems may facilitate use of an application on the electronic device by a user without being limited by the operating system. The user may use different applications of different operating systems on one electronic device.

However, in the electronic device with the plurality of operating systems, when an application in a guest operating system displays an interface, the guest operating system may send various drawing data (for example, window information, a draw call, and level information of a layer) of the interface to a host operating system. The host operating system renders, composes, and displays display content of an application window in the guest operating system based on the drawing data. In the process, it takes a long time for the electronic device to draw a frame of image. In this case, time required for refreshing a frame of image by a display of the electronic device is also long. Therefore, it is difficult for the electronic device to achieve a high refresh rate when running the application in the guest operating system.

### SUMMARY

The present invention provides a multi-operating system-based graphics display method and a related apparatus. A guest OS in an electronic device may directly access a rendering device and a graphics memory of the electronic device to perform rendering and layer composition, and submit a composed layer to a host OS to complete composition and display of application windows of a guest-side app and a host-side app. In this way, the guest-side app can support a high refresh rate during running, to achieve and approach running effect of the host-side app, and improve screen viewing experience of a user when using the guest-side app.

According to a first aspect, this application provides a multi-operating system-based graphics display method. The method may be applied to an electronic device running a plurality of operating systems, the plurality of operating systems include one host operating system and at least one guest operating system, the host operating system is a first operating system, and the at least one guest operating system includes a second operating system. The second operating system may obtain one or more first layers through rendering according to a rendering instruction of a first application. The first application is an application in the second operating system, and the one or more first layers are layers included in a first application window of the first application. The second operating system may compose the one or more first layers to obtain a second layer. The first operating system may obtain the second layer, and display the first application window on a display of the electronic device based on the second layer.

That the second operating system obtains the one or more first layers through rendering may be specifically obtaining display data of the one or more first layers through rendering. That the second operating system composes the one or more first layers to obtain the second layer may be specifically obtaining display data of the second layer. The first operating system may display the first application window based on the display data of the second layer. The display data may include pixel data.

It can be learned from the foregoing method that, in the electronic device in which the plurality of operating systems are simultaneously run, the guest OS can render and compose the layer included in the application window of the guest-side app. The host OS can directly obtain the composed layer obtained after the guest OS performs rendering and composition, to display the application window of the guest-side app on the display. The guest OS may not need to send a large quantity of rendering instructions to the host OS. This can improve a speed of drawing a frame of image by the electronic device, so that the guest-side app in the electronic device can support a high refresh rate during running. The refresh rate of the guest-side app during running can achieve or approach running effect of a host-side app. This effectively improves screen viewing experience of a user when using the guest-side app.

With reference to the first aspect, in some embodiments, the first operating system may obtain first window information of the first application window. Then, the first operating system may display the first application window on the display of the electronic device based on the second layer and the first window information.

In some embodiments, the first window information includes first window location information, first window size information, and first window level information. The first window location information may indicate a display location of the first application window on the display. The first window size information may indicate a display size of the first application window on the display. The first window level information may indicate a display level of the first application window in all application windows displayed on the display.

With reference to the first aspect, in some embodiments, the electronic device includes hardware resources: a rendering device and a graphics memory. The first operating system and the second operating system may share the rendering device and the graphics memory. The second operating system may obtain the one or more first layers through rendering via the rendering device according to the rendering instruction of the first application, where the one or more first layers are stored in the graphics memory.

In some embodiments, the first operating system may map the rendering device and the graphics memory to the second operating system by using a virtualization technology, for example, a virtual machine-based virtualization technology or a container-based virtualization technology. In this way, the second operating system can use the rendering device and the graphics memory.

With reference to the first aspect, in some embodiments, the second operating system may determine a first memory area from the graphics memory, and store the second layer in the first memory area. The second operating system sends first indication information of the first memory area to the first operating system, where the first indication information indicates a location of the first memory area in the graphics memory. For example, the first indication information may be a handle or a pointer.

The first operating system may obtain the second layer from the graphics memory based on the first indication information.

It can be seen that when the guest-side app needs to display the application window, the guest OS can perform rendering and composition via the rendering device and the graphics memory. The composed layer is stored in the graphics memory. In this way, the guest OS can send, to the host OS, the indication information (for example, the handle) used to index the composed layer, and does not need to send the large quantity of rendering instructions all to the host OS. The host OS can obtain, from the graphics memory based on the received indication information, the composed layer obtained by performing rendering and composition by the guest OS. In this way, the host OS can more quickly obtain the display data of the to-be-displayed application window of the guest-side app, so that the application window of the guest-side app can be quickly displayed.

With reference to the first aspect, in some embodiments, the first operating system may determine a second memory area from the graphics memory, and send second indication information of the second memory area to the second operating system, where the second indication information indicates a location of the second memory area in the graphics memory. The second operating system may store the second layer in the second memory area based on the second indication information.

After the second operating system stores the second layer in the second memory area, the first operating system may obtain the second layer from the graphics memory based on the second indication information.

It can be learned that the memory area in which the guest OS stores the composed layer in the graphics memory may be allocated by the host OS. In this way, in a process of displaying the application window of the guest-side app, the guest OS may not need to send, to the host OS, the indication information (for example, the handle) used to index the composed layer. This can reduce time required for the host OS to obtain the composed layer in the guest OS, and improve a speed of drawing, by the electronic device, a frame of image including the application window of the guest-side app.

With reference to the first aspect, in some embodiments, the first operating system may obtain one or more third layers through rendering according to a rendering instruction of a second application, where the second application is an application in the first operating system, and the one or more third layers are layers included in a second application window of the second application. The first operating system composes the one or more third layers to obtain a fourth layer. The first operating system may compose the first application window and the second application window based on the second layer and the fourth layer, and display, on the display, the first application window and the second application window that are composed.

In some embodiments, the first operating system may obtain first window information of the first application window and second window information of the second application window. The first operating system may compose the first application window and the second application window based on the second layer, the first window information, the fourth layer, and the second window information.

With reference to the first aspect, in some embodiments, the second operating system may obtain one or more fifth layers through rendering according to a rendering instruction of a third application, where the third application is an application in the second operating system, and the one or more fifth layers are layers included in a third application window of the third application. The second operating system composes the one or more fifth layers to obtain a sixth layer. The first operating system obtains the sixth layer. The first operating system may compose the first application window and the third application window based on the second layer and the sixth layer, and display, on the display, the first application window and the third application window that are composed.

In some embodiments, the first operating system may obtain first window information of the first application window and third window information of the third application window. The first operating system composes the first application window and the third application window based on the second layer, the first window information, the sixth layer, and the third window information.

It can be learned that, in a scenario in which a plurality of guest-side apps are run and application windows need to be displayed, the guest OS may separately render and compose the application windows of the plurality of guest-side apps, to obtain a plurality of composed layers corresponding to the application windows of the plurality of guest-side apps. The guest OS may send the plurality of composed layers to the host OS. Then, the host OS may display the application windows of the plurality of guest-side apps based on the plurality of composed layers. The composed layers that are of the application windows of the plurality of guest-side apps and that are obtained by the host OS may be independent of each other. In this way, the user can randomly adjust a display level sequence between application windows of the host-side app and the guest-side app on the display. User experience of using the guest-side app can be better consistent with that of using the host-side app.

According to a second aspect, this application provides an electronic device. The electronic device may include a rendering device, a graphics memory, a storage, and a processor. The rendering device may be configured to perform rendering according to a rendering instruction to obtain display data. The graphics memory may be configured to store the display data. The storage may be configured to store a computer program. The processor may run a plurality of operating systems, where the plurality of operating systems include one host operating system and at least one guest operating system. The processor may be configured to invoke the computer program, so that the electronic device performs the method according to any possible implementation of the first aspect.

According to a third aspect, this application provides a computer-readable storage medium, including instructions. When the instructions are run on an electronic device, the electronic device is enabled to perform the method according to any possible implementation of the first aspect.

According to a fourth aspect, this application provides a computer program product. The computer program product may include computer instructions, and when the computer instructions are run on an electronic device, the electronic device is enabled to perform the method according to any possible implementation of the first aspect.

According to a fifth aspect, this application provides a chip. The chip is used in an electronic device, the chip includes one or more processors, and the processor is configured to invoke computer instructions, so that the electronic device is enabled to perform the method according to any possible implementation of the first aspect.

It may be understood that the electronic device according to the second aspect, the computer-readable storage medium according to the third aspect, the computer program product according to the fourth aspect, and the chip according to the fifth aspect are all configured to perform the method provided in embodiments of this application. Therefore, for beneficial effect that can be achieved by the electronic device, the computer-readable storage medium, the computer program product, and the chip, refer to the beneficial effect in the corresponding method. Details are not described herein again.

### BRIEF DESCRIPTION OF DRAWINGS

FIG. 1 to FIG. 3 are diagrams of structures of some electronic devices 100 according to an embodiment of this application;
FIG. 4A to FIG. 4G-1 and FIG. 4G-2 are diagrams of some graphics display scenarios according to an embodiment of this application;
FIG. 5 to FIG. 7 are diagrams of structures of some electronic devices 100 according to an embodiment of this application; and
FIG. 8 is a flowchart of a graphics display method according to an embodiment of this application.

### DESCRIPTION OF EMBODIMENTS

The following describes technical solutions in embodiments of this application with reference to accompanying drawings in embodiments of this application. In descriptions of embodiments of this application, terms used in the following embodiments are merely intended to describe specific embodiments, but are not intended to limit this application. Terms "a", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). A term "and/or" describes an association relationship between associated objects and indicates that three relationships may exist. For example, A and/or B may indicate the following three cases: Only A exists, both A and B exist, and only B exists, where A and B may be singular or plural. A character "/" usually indicates an "or" relationship between the associated objects.

Referring to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "have", and their variants all mean "include but are not limited to", unless otherwise specifically emphasized in another manner. A term "connection" includes a direct connection and an indirect connection, unless otherwise specified. "First" and "second" are merely intended for description, and shall not be understood as an indication or implication of relative importance or implicit indication of a quantity of indicated technical features.

In embodiments of this application, words such as "example" or "for example" indicate giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

A term "user interface (user interface, UI)" in the following embodiments of this application is a medium interface for interaction and information exchange between an application (application, APP) or an operating system (operating system, OS) and a user, and implements conversion between an internal form of information and a form acceptable to the user of the information. The user interface is source code written in a specific computer language like Java or an extensible markup language (extensible markup language, XML). The interface source code is parsed and rendered on an electronic device, and finally presented as user-recognizable content. The user interface is usually represented in a form of a graphical user interface (graphical user interface, GUI), and is a user interface that is related to a computer operation and that is displayed in a graphic manner. The user interface may be a visual interface element like text, an icon, a button, a menu, a tab, a text box, a dialog box, a status bar, a navigation bar, or a widget that is displayed on a display of the electronic device.

This application provides a multi-operating system-based graphics display method. The method may be applied to an electronic device including a plurality of operating systems. The electronic device may include one host OS and at least one guest OS. The host OS may map a rendering device and a graphics memory at a hardware layer of the electronic device to the guest OS. After the mapping operation, the host OS and the guest OS may share the rendering device and the graphics memory. When a guest-side app requests to display an application window, the guest OS may implement graphics rendering via the rendering device in the electronic device according to a rendering instruction of the app, and compose a layer obtained through the graphics rendering. The guest OS may store, in the graphics memory of the electronic device, display data obtained through rendering and composition. Then, the guest OS may send, to the host OS, window information (for example, a window size, a window level, and a window location) of the to-be-displayed application window of the guest-side app and a handle used to index the display data. Further, the host OS may determine display content of the to-be-displayed application window of the guest-side app, compose the display content of the guest-side app and display content of a host-side app, and display the composed display content on a display of the electronic device.

It can be learned from the foregoing method that, because the host OS maps the rendering device and the graphics memory to the guest OS, the host OS and the guest OS may share the rendering device and the graphics memory. When the guest-side app needs to display the application window, the guest OS can use the rendering device and the graphics memory to perform rendering and composition independently. The guest OS only needs to send, to the host OS, the window information and the handle used to index the composed display data, and does not need to send a large quantity of rendering instructions to the host OS. A data amount of the to-be-sent window information and handle is far less than a data amount of the rendering instruction sent by the guest OS to the host OS. This helps improve a speed of drawing a frame of image by the electronic device.

In addition, the guest OS may independently perform rendering according to the rendering instruction of the app in one process. However, in a solution in which the guest OS sends data like the rendering instruction to the host OS, and the host OS performs rendering, composition, and display, sending of the data like the rendering instruction usually needs to be completed through a plurality of processes in the guest OS. In this case, in the graphics display method provided in this application, the host OS can more quickly obtain the display data of the to-be-displayed application window of the guest-side app, so that the application window of the guest-side app can be quickly displayed.

It can be learned that, in the electronic device in which the plurality of operating systems are simultaneously run, the graphics display method provided in this application can improve the speed of drawing a frame of image by the electronic device, so that the guest-side application in the electronic device can support a high refresh rate during running. The refresh rate of the guest-side application during running can achieve or approach running effect of the host-side application. According to the foregoing method, screen viewing experience of a user when using the guest-side app can be effectively improved.

For ease of understanding, the following describes some concepts in this application.

### 1. Host OS and guest OS

A host may be a physical electronic device. The host may also be referred to as a name like a host (host). A guest may be a computer configuration environment obtained by the electronic device by abstracting, dividing, and combining physical resources of the electronic device by using a virtualization technology. The guest may also be referred to as a name like a guest (guest). In other words, the host is a physical basis of the guest. The guest exists in the host. Running of the host is a prerequisite and a basis for running of the guest.

The host OS may be an OS that is loaded on the host. The host OS adapts to hardware (for example, a processor and a storage) in the host, and can directly control the hardware in the host. The host OS may be, for example, an operating system like Android^{®}, HarmonyOS^{®}, Linux^{®}, or Windows^{®}.

The guest OS may be an OS that is loaded on the guest. The guest OS may be, for example, an operating system like Android^{®}, HarmonyOS^{®}, Linux^{®}, or Windows^{®}.

Types of the host OS and the guest OS are not limited in embodiments of this application.

Apps can be installed on both the host and the guest. The app installed on the host (namely, the host-side app) may be an app that adapts to the host OS and that can be run on the host OS. The app installed on the guest (namely, the guest-side app) may be an app that adapts to the guest OS and that can be run on the guest OS. In this way, a user can install and use, in one electronic device, apps that adapt to different OSs. For example, the host OS is HarmonyOS^{®}. The guest OS is Android^{®}. If an app cannot be run in the HarmonyOS^{®} environment but can be run in the Android^{®} environment, the electronic device may install the app on the guest. The user can use both an app that is run on HarmonyOS^{®} and an app that is run on Android^{®} in the electronic device.

### 2. Virtualization technology

The virtualization technology may include a virtual machine (virtual machine, VM)-based virtualization technology and a container-based virtualization technology. Based on the virtualization technology, the host OS in the electronic device may map one or more hardware devices such as a rendering device and a graphics memory in the electronic device to the guest OS. The host OS and the guest OS may share the one or more mapped hardware devices.

### 2.1 Virtual machine-based virtualization technology

The virtual machine may indicate a complete software-simulated computer system that has complete hardware system functions and that is run in an entirely isolated environment. The virtual machine can simulate a complete set of hardware, including a processor, a storage, a network interface, and the like, of the virtual machine through software. The user can perform an operation on the virtual machine as the user does on a physical machine.

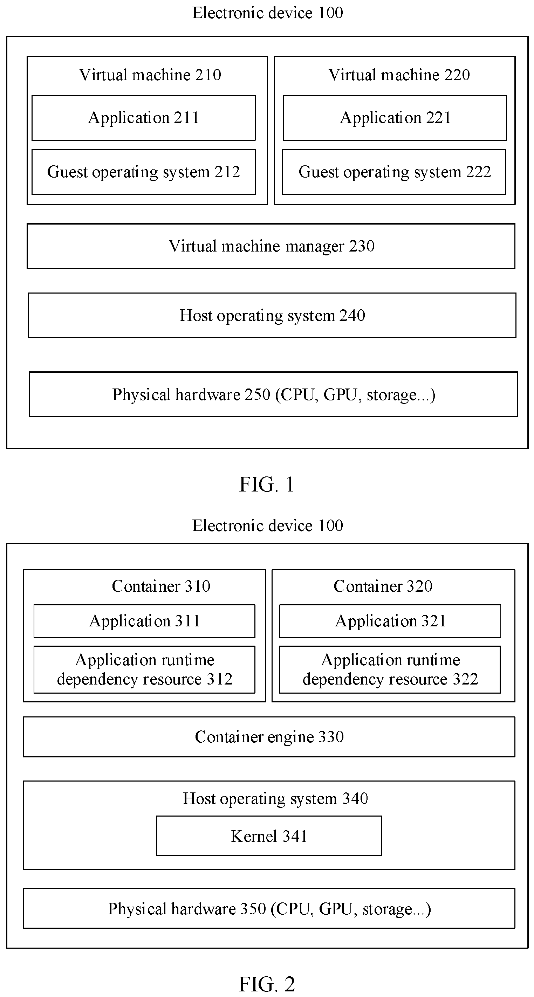

**FIG. 1** **is a block diagram of an example of a structure of an electronic device 100 in a case in which the virtual machine-based virtualization technology is used.**

As shown in FIG. 1, the electronic device 100 may include a virtual machine 210, a virtual machine 220, a virtual machine manager 230, a host operating system 240, and physical hardware 250.

The virtual machine 210 may include an application 211 and a guest operating system 212. The application 211 may indicate one or more apps installed on the virtual machine 210.

The virtual machine 220 may include an application 221 and a guest operating system 222. The application 221 may indicate one or more apps installed on the virtual machine 220.

One virtual machine in the electronic device 100 may be one guest.

The electronic device 100 is not limited to the virtual machine 210 and the virtual machine 220, and may further include more or fewer virtual machines.

The guest operating system 212, the guest operating system 222, and the host operating system 240 may be a same OS or different OSs.

The virtual machine manager (virtual machine monitor, VMM) 230 may be configured to separate and properly configure resources and hardware of the electronic device 100 for use by the virtual machine (for example, the virtual machine 210 and the virtual machine 220) in the electronic device 100. In a running process of the virtual machine in the electronic device 100, when an application in the virtual machine sends an instruction that the application needs to obtain more resources from a physical environment, the virtual machine manager 230 may schedule resources of a physical system, so that the operating system and the application in the virtual machine can access shared physical hardware. The virtual machine manager 230 may also be referred to as a virtual machine monitor (hypervisor).

The physical hardware 250 may include a central processing unit (central processing unit, CPU), a graphics processing unit (graphics processing unit, GPU), a storage, and the like of the electronic device 100.

It can be learned from the block diagram of the software structure shown in FIG. 1 that the host operating system 240 may map the hardware devices such as a rendering device and a graphics memory to the guest operating system (for example, the guest operating system 212 or the guest operating system 222) via the virtual machine manager 230. The guest operating system may access, via the virtual machine manager, the hardware device shared with the host operating system 240.

### 2.2 Container-based virtualization technology

A container may be a software package that includes all resources required for running of an application in the container in any environment. The software package may include an application, a system library required by the application, an external third-party code package, and another operating system-level application. In other words, the container may provide isolated running space for an application in the container. Each container may include user environment space that is exclusive and complete. Containers in one electronic device may be independent of each other and do not interfere with each other.

**FIG. 2** **is a block diagram of an example of a structure of an electronic device 100 in a case in which the container-based virtualization technology is used.**

As shown in FIG. 2, the electronic device 100 may include a container 310, a container 320, a container engine 330, a host operating system 340, and physical hardware 350.

The container 310 may include an application 311 and an application runtime dependency resource 312. The application 311 may indicate one or more apps installed in the container 310. The application runtime dependency resource 312 may indicate all resources required when the app (namely, the application 311) in the container 310 is run, for example, a system library, an external third-party code package, and another operating system-level application that are required when the app is run.

The container 320 may include an application 321 and an application runtime dependency resource 322. The application 321 may indicate one or more apps installed in the container 320. The application runtime dependency resource 322 may indicate all resources required when the app (namely, the application 321) in the container 320 is run.

The electronic device 100 may package an application and all resources required for running of the application in any environment, to generate a container image. The electronic device 100 may create a container (for example, the container 310 or the container 320) based on the container image. Because the container includes the application and all the resources required for the running of the application in the any environment, the container may be run on any type of electronic device and operating system. In other words, the application in the container of the electronic device 100 may be run independently of the host operating system 340. Even if an app does not adapt to the host operating system 340, the electronic device 100 may install and run the app by using the container-based virtualization technology. The container image may be equivalent to packaging of the application and the operating system on which the application is run.

One container in the electronic device 100 may be understood as one guest in this application. One operating system to which an application in a container adapts may be one guest OS in the electronic device 100. For example, the host operating system in the electronic device 100 is HarmonyOS^{®}. An operating system to which the application 311 in the container 310 adapts is Android^{®}. In this case, the guest OS corresponding to the container 310 may be Android^{®}.

Adaptation between an application and an operating system may indicate that the application can be directly run on the operating system.

The electronic device 100 is not limited to the container 310 and the container 320, and may further include more or fewer containers.

The container engine 330 may be a software program for creating the container based on the container image. The container engine 330 may serve as an intermediate agent between the container (for example, the container 310 or the container 320) and the host operating system 340, to provide and manage the resources required by the application in the container. The container engine 330 may also be referred to as a container runtime.

The host operating system 340 may include a kernel 341. The kernel 341 may be configured to manage a system process, a memory, a device driver, a file, a network system, and the like. The kernel 341 may include a controller or a driver configured to control the physical hardware 350 in the electronic device 100. For example, the kernel 341 may include a display driver, a disk driver, an audio driver, a sensor driver, a camera driver, and the like.

The containers (such as the container 310 and the container 320) in the electronic device 100 may share the kernel 341 of the host operating system 340. Because the kernel 341 may be configured to control the physical hardware in the electronic device 100, the guest OS corresponding to the container in the electronic device 100 may share hardware devices such as a rendering device and a graphics memory with the host operating system 340.

The physical hardware 350 may include a CPU, a GPU, a storage, and the like of the electronic device 100.

It can be learned from the block diagram of the software structure shown in FIG. 2 that the host operating system 340 may share, by using the container-based virtualization technology, the kernel 341 with the guest OS that corresponds to the container and that is in the electronic device 100, so that the host operating system 340 maps the hardware devices such as the rendering device and the graphics memory to the guest OS. The guest OS may access, via the kernel 341, the hardware device shared with the host operating system 340.

The structures of the electronic device 100 shown in FIG. 1 and FIG. 2 are merely examples for description of this application, and should not constitute a limitation on this application. The electronic device 100 may further include more or fewer software or hardware structures.

In addition to the virtual machine-based virtualization technology and the container-based virtualization technology, the electronic device 100 may further use another virtualization technology to implement sharing of one or more hardware devices in the electronic device 100 by the host OS and the guest OS.

### 3. Rendering device, graphics memory, and display device

The rendering device, the graphics memory, and the display device may all indicate abstract descriptions of the physical hardware that actually exists in the electronic device 100. For example, the rendering device may indicate an abstract description of the GPU in the electronic device 100. The graphics memory may indicate an abstract description of the graphics memory in the electronic device 100. The display device may indicate an abstract description of the display in the electronic device 100.

A hardware device that is abstractly described based on physical hardware may correspond to a corresponding device file. The application and the operating system in the electronic device 100 may access a corresponding hardware device through a device file, to control corresponding physical hardware.

For example, a path of a device file corresponding to the rendering device may be /dev/gpu0. The application and the operating system in the electronic device 100 may access the GPU in the electronic device 100 through the device file "/dev/gpu0", to perform graphics rendering via the GPU.

For example, a path of a device file corresponding to the graphics memory may be /dev/dma_heap. The application and the operating system in the electronic device 100 may access the graphics memory in the electronic device 100 through the device file "/dev/dma _heap", to store graphics data (for example, data obtained through GPU rendering) via the graphics memory.

For example, a path of a device file corresponding to the display device may be /dev/fb0. The device file "/dev/fb0" may be used to control pixels displayed on points on the display. The device file "/dev/fb0" may include pixel data of the points on the display. The application and the operating system in the electronic device 100 may write pixel data of a to-be-displayed graph into the device file "/dev/fb0", to display the corresponding graph on the display. The display device may also be referred to as a frame buffer (frame buffer).

It may be understood that the paths of the device files corresponding to the rendering device, the graphics memory, and the display device are merely examples for description of this application. The device files corresponding to the rendering device, the graphics memory, and the display device are not limited in embodiments of this application.

### 4. Frame rate and refresh rate

The frame rate may indicate a quantity of frames of images sent to the display by a device that performs image rendering (for example, the GPU) within 1 second. Alternatively, the frame rate may be understood as a rate at which the device renders an image within 1 second. For example, if the frame rate is 60 frames/second (frames per second, FPS), it may indicate that the GPU can generate 60 frames of images per second.

The refresh rate may indicate a rate at which the display refreshes a displayed image of the display. For example, if the refresh rate is 60 hertz (Hz), it may indicate that the display can refresh an image for 60 times per second.

If the frame rate is lower than the refresh rate, the display displays a same frame after a plurality of times of refresh. For example, the frame rate is 30 FPS. The refresh rate is 144 Hz. In this case, the GPU can send only 30 frames of images to the display within 1 second. However, the display refreshes for 144 times within 1 second, and displays, in a process of the 144 times of refresh, the 30 frames of images sent by the GPU. In other words, a same frame of image is displayed after the plurality of times of refresh of the display. In the foregoing case, because the GPU cannot quickly generate an image, and cannot provide a sufficient quantity of frames for the display to refresh, it is difficult for the display to generate images at a high refresh rate even if the display has a high refresh rate configuration. The user may feel frame freezing when viewing the display.

When the frame rate is higher than the refresh rate, the display usually discards some frames of images sent by the GPU. For example, the frame rate is 120 FPS. The refresh rate is 60 Hz. In this case, the GPU sends 120 frames of images to the display within 1 second. However, the display refreshes for only 60 times within 1 second. The display can display only 60 frames of the 120 frames of images sent by the GPU and discard the other 60 frames of images. In some embodiments, before the display completes refresh of one frame of image, if the GPU covers the frame buffer with another to-be-displayed frame of image, the display simultaneously displays a part of the frame of image and a part of the another frame of image. The user may see screen tearing on the display.

It may be understood that, in a case in which the frame rate matches the refresh rate (that is, the frame rate is the same as or similar to the refresh rate), a higher refresh rate configured for the display indicates a larger quantity of frames of images displayed by the display within 1 second. In this way, the display can present more details, motion presented in an image is smoother, and user experience of viewing the display is better.

According to the graphics display method in this application, time from sending the rendering instruction by the guest-side app to obtaining the corresponding pixel data through rendering according to the rendering instruction can be shortened, thereby increasing the frame rate at which the electronic device 100 generates the application window of the guest-side app. In this way, the guest-side app can support the high refresh rate of the display during running. The guest-side app can present smooth display content on the display, thereby improving the screen viewing experience of the user when using the guest-side app.

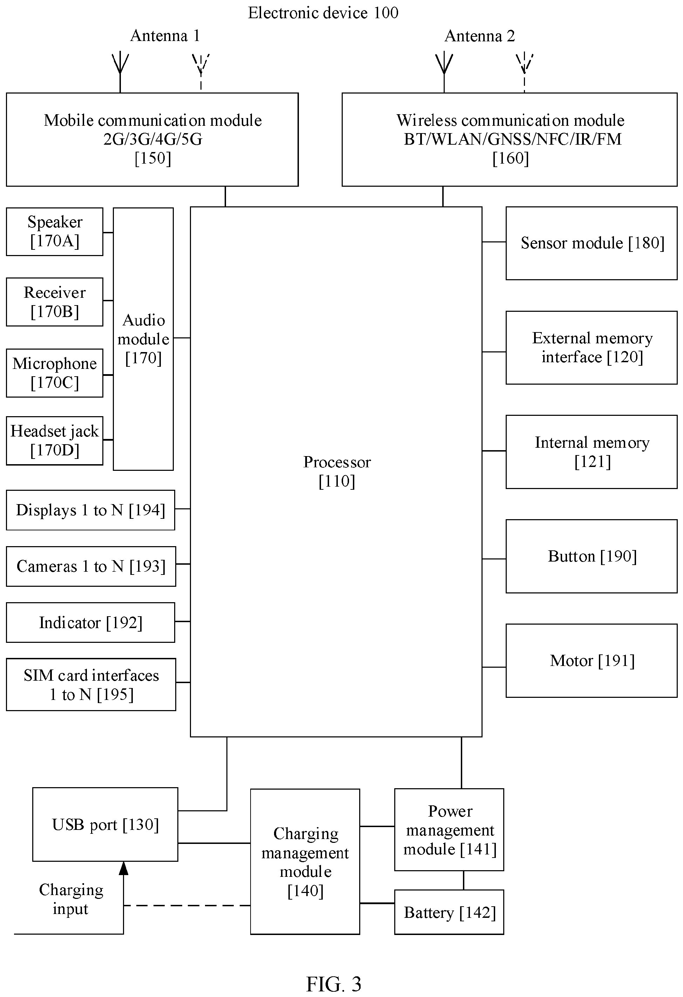

**FIG. 3** **is a diagram of an example of a structure of an electronic device 100 according to an embodiment of this application.**

As shown in FIG. 3, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a storage, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal to complete control of instruction fetching and instruction execution.

A storage may be further disposed in the processor 110, and is configured to store instructions and data. In some embodiments, the storage in the processor 110 is a cache. The storage may store instructions or data that has been used or cyclically used by the processor 110. If the processor 110 needs to use the instructions or the data again, the processor may directly invoke the instructions or the data from the storage. This avoids repeated access, reduces waiting time of the processor 110, and improves system efficiency.

The USB port 130 is a port that conforms to a USB standard specification, and may be specifically a mini USB port, a micro USB port, a USB Type-C port, or the like. The USB port 130 may be configured to connect to a charger to charge the electronic device 100, or may be configured to transmit data between the electronic device 100 and a peripheral device. The USB port 130 may alternatively be configured to connect to a headset, to play an audio via the headset.

The charging management module 140 is configured to receive a charging input from a charger. The charger may be a wireless charger or a wired charger. The charging management module 140 supplies power to the electronic device via the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented via the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave via the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation via the antenna 1.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processor module. The wireless communication module 160 receives an electromagnetic wave via the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation via the antenna 2.

The electronic device 100 implements a display function via the GPU, the display 194, the application processor, and the like. The GPU is a microprocessor for image processing, and is connected to the display 194 and the application processor. The GPU is configured to: perform mathematical and geometric computation, and render an image.

The display 194 is configured to display an image, a video, and the like. In some embodiments, the electronic device 100 may include one or N displays 194, where N is a positive integer greater than 1.

The electronic device 100 may implement a photographing function via the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera via a lens. An optical signal is converted into an electrical signal, and the photosensitive element of the camera transmits the electrical signal to the ISP for processing, to convert the electrical signal into a visible image.

The camera 193 is configured to capture a static image or a video. In some embodiments, the electronic device 100 may include one or N cameras 193, where N is a positive integer greater than 1.

The digital signal processor is configured to process a digital signal, and may process another digital signal in addition to processing the digital image signal. For example, when the electronic device 100 selects a frequency, the digital signal processor is configured to perform Fourier transform on frequency energy, and the like.

The NPU is a neural-network (neural-network, NN) computing processor. The NPU quickly processes input information by referring to a structure of a biological neural network, for example, with reference to a transfer mode between human brain neurons, and may further continuously perform self-learning. Applications such as intelligent cognition of the electronic device 100 may be implemented via the NPU, for example, image recognition, facial recognition, speech recognition, and text understanding.

The external memory interface 120 may be configured to connect to an external storage card, for example, a Micro SD card, to extend a storage capability of the electronic device 100. The external memory card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program memory area and a data memory area. The program memory area may store an operating system, an application required by at least one function (for example, a sound playing function or an image playing function), and the like. The data memory area may store data (for example, audio data or an address book) and the like created during use of the electronic device 100. In addition, the internal memory 121 may include a high-speed random access memory, and may further include a nonvolatile memory, for example, at least one magnetic disk storage device, a flash memory, or a universal flash storage (universal flash storage, UFS).

The electronic device 100 may implement an audio function, for example, music playing or recording, via the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: code and decode an audio signal. In some examples, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The motor 191 may generate a vibration prompt. The indicator 192 may be an indicator lamp, and may be configured to indicate a charging status and a power change, or may be configured to indicate a message, a missed call, a notification, and the like.

The SIM card interface 195 is configured to connect to an SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as conversation and data communication. In some examples, the electronic device 100 uses an eSIM, namely, an embedded SIM card. The eSIM card may be embedded into the electronic device 100, and cannot be separated from the electronic device 100.

The electronic device 100 may be an electronic device of a type like a mobile phone, a tablet computer, a notebook computer, a smartwatch, or a smart band. A specific type of the electronic device 100 is not limited in embodiments of this application. An operating system (namely, a host OS) carried in the electronic device 100 may be iOS^{®}, Android^{®}, Windows^{®}, HarmonyOS^{®}, or another operating system.

The following describes, based on the electronic device 100, graphics display scenarios provided in embodiments of this application.

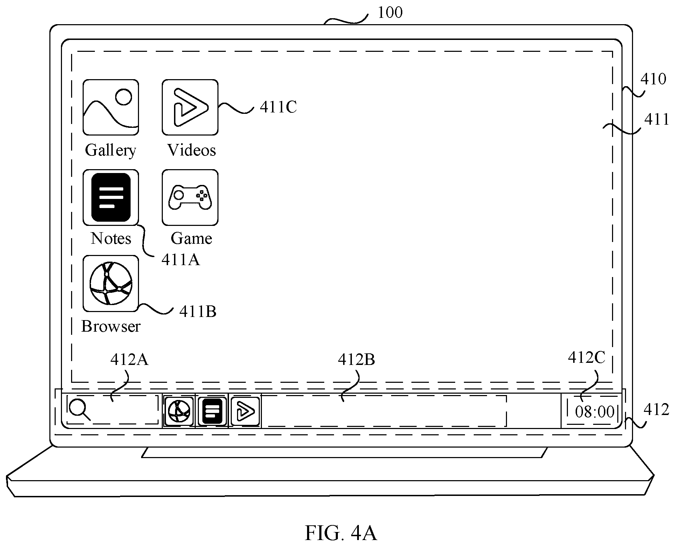

**FIG. 4A to FIG. 4G-1** **and** **FIG. 4G-2** **show examples of multi-operating system-based graphics display scenarios.**

As shown in FIG. 4A, the electronic device 100 may display a user interface 410. The user interface 410 may also be referred to as a desktop of the electronic device 100. The user interface 410 may include a display area 411 and a taskbar 412.

The display area 411 may be used to display content like application icons of apps and a desktop wallpaper in the electronic device 100. The app in the electronic device 100 may include a host-side app and a guest-side app. For example, application icons of apps such as a notes application icon 411A, a browser application icon 411B, a videos application icon 411C, a game application icon, and a gallery application icon may be displayed in the display area 411. The application icon displayed in the display area 411 may include an application icon of the host-side app and an application icon of the guest-side app.

In a possible implementation, the application icon of the guest-side app may have a guest identifier, so that a user can distinguish between the host-side app and the guest-side app. A display style of the application icon is not limited in embodiments of this application.

Herein, an example in which the notes application is the host-side app, and the browser application and the videos application are the guest-side apps is used for description.

The taskbar 412 may include a search box 412A, an application area 412B, and a system tray 412C. The search box 412A may be used to implement a function of searching for information like an app and a file in the electronic device 100. The application area 412B may be used to display the application icon. The application icon displayed in the application area 412B may include an application icon fixed in the taskbar 412 and an application icon of an app that is running in the electronic device 100. The system tray 412C may be used to display content like time information, a notification message, battery level information, and keyboard input management.

For example, the browser application icon, the notes application icon, and the videos application icon may be displayed in the application area 412B. This may indicate that the browser application, the notes application, and the videos application are running in the electronic device 100. The electronic device 100 may display, in the user interface 410 in response to an operation (for example, a tap operation) on an application icon in the application area 412B, an application window of an app corresponding to the application icon or minimize the application window of the app corresponding to the application icon.

In a possible implementation, the user interface 410 may be displayed and managed by a desktop application. The desktop application may be the host-side app.

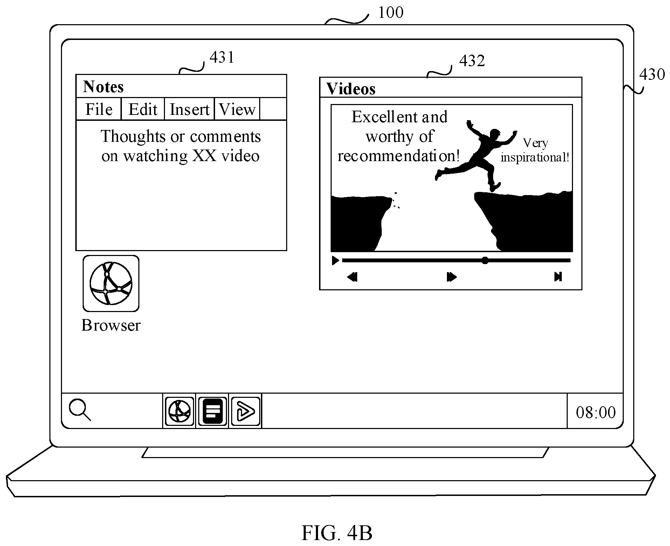

As shown in FIG. 4B, the electronic device 100 may display an application window 431 of the notes application and an application window 432 of the videos application in a user interface 430.

In a possible implementation, because the videos application is the guest-side app in the electronic device 100, a guest OS may perform rendering according to a rendering instruction of the videos application and perform composition, to obtain display data of the videos application window 432.

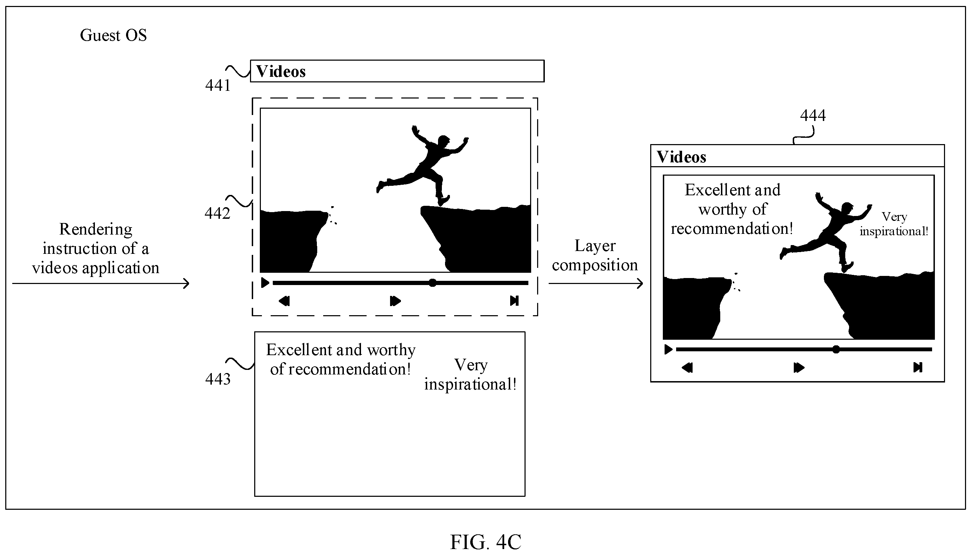

As shown in FIG. 4C, the videos application may send the rendering instruction in a running process. The rendering instruction may be used to draw the videos application window 432. The guest OS may perform rendering according to the rendering instruction of the videos application, to generate one or more layers corresponding to the videos application window 432.

For example, the videos application window 432 includes three layers: a layer 441, a layer 442, and a layer 443. The layer 441 may be used to display a title bar, to indicate information like a name of the videos application. The layer 442 may be used to display information like video playing content of the videos application and a control used to control video playing. The layer 443 may be used to display information like a bullet comment in a video playing process. The layer included in the videos application window 432 is not limited in embodiments of this application.

Further, the guest OS may perform layer composition based on layer location information and layer level information of the layer 441, the layer 442, and the layer 443 to obtain a layer 444. The layer 444 may indicate display data of the videos application window 432. The display data may include pixel data of points in the videos application window 432.

A specific implementation in which the guest OS performs rendering and composition is described in the following embodiments. Details are not described herein.

The guest OS may send a handle corresponding to the composed layer 444 and window information of the videos application window 432 to a host OS, so that the host OS can display the videos application window 432 on a display. The layer 444 may be stored in a graphics memory of the electronic device 100. The handle corresponding to the layer 444 may indicate a storage location of the layer 444 in the graphics memory. The host OS may obtain the layer 444 from the graphics memory based on the handle corresponding to the layer 444. The window information of the videos application window 432 may include window location information, window size information, and window level information of the videos application window 432 displayed on the display.

As shown in FIG. 4D-1 and FIG. 4D-2, when the layer and the window information of the application window of the guest-side app are obtained, the host OS may compose the layer of the application window of the guest-side app and a layer of an application window of a running host-side app, and then send a composed layer to the display for display.

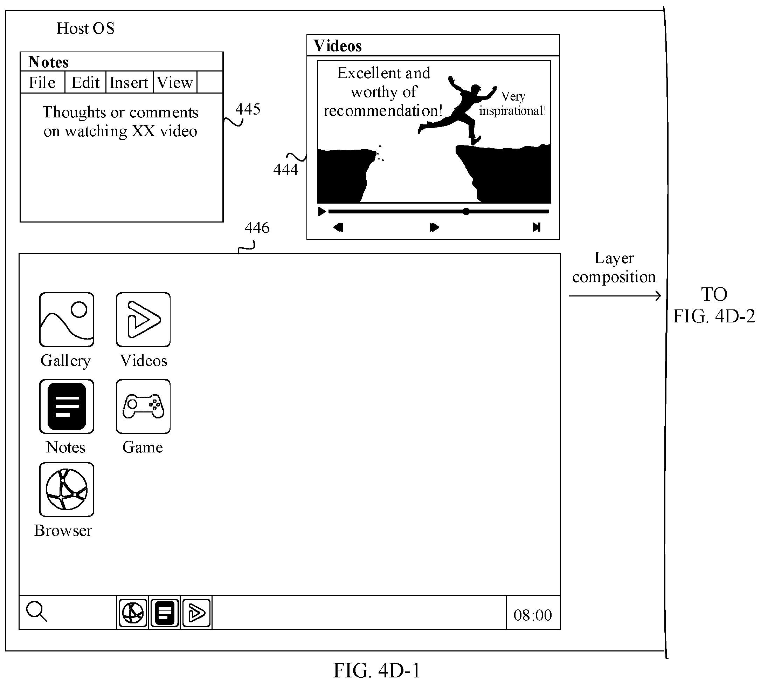

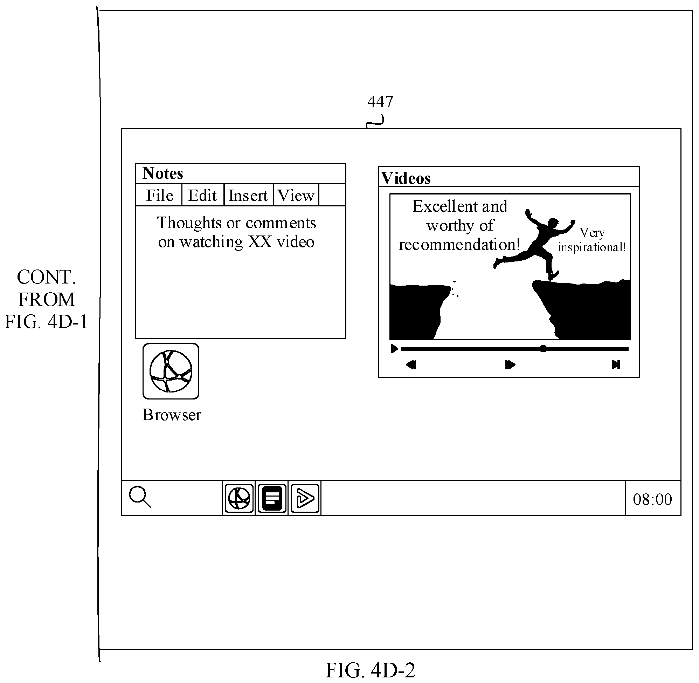

For example, because the notes application is the host-side app, the host OS may perform rendering according to a rendering instruction of the notes application and perform composition, to obtain display data of a notes application window 431. Similarly, because the desktop application is the host-side app, the host OS may perform rendering according to a rendering instruction of the desktop application and perform composition, to obtain display data of the desktop. A layer 445 shown in FIG. 4D-1 may indicate the display data of the notes application window 431. A layer 446 shown in FIG. 4D-1 may indicate the display data of the desktop. The layer 444 shown in FIG. 4D-1 may be obtained by the host OS from the graphics memory of the electronic device 100 based on the handle sent by the guest OS.

Further, the host OS may compose the layer 444, the layer 445, and the layer 446 based on the window information of the guest-side app and the window information of the host-side app, to obtain a layer 447 shown in FIG. 4D-2. The layer 447 may indicate display data of an interface obtained after the application window of the guest-side app and the application window of the host-side app are composed. The host OS may display on the display based on the display data corresponding to the layer 447. In this way, the electronic device 100 can display, on the display, display content shown in FIG. 4B.

In some embodiments, a plurality of guest-side apps are run and application windows all need to be displayed on the display. The guest OS may perform rendering according to rendering instructions of the plurality of guest-side apps and perform composition, to obtain display data of the application windows of the plurality of guest-side apps. The guest OS may store the display data of the application windows of the plurality of guest-side apps in the graphics memory of the electronic device 100. The guest OS may send handles corresponding to the display data to the host OS. Then, the host OS may obtain the display data of the application windows of the plurality of guest-side apps from the graphics memory based on the received handles. The host OS may compose an application window of an app that is running on the host and the application windows of the plurality of guest-side apps, and send a composed application window for display.

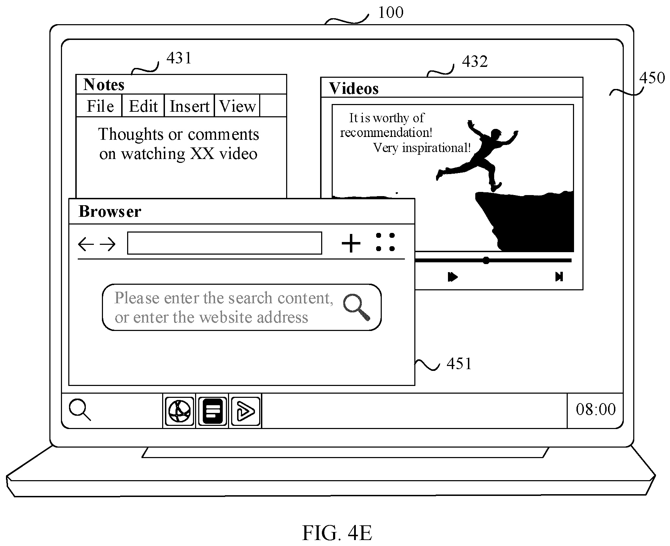

As shown in FIG. 4E, the electronic device 100 may display the notes application window 431, the videos application window 432, and the browser application window 451 in a user interface 450. The electronic device 100 runs the videos application and the browser application on the guest, and runs the notes application and the desktop application on the host. Based on the videos application, the electronic device 100 may display the videos application window 432. Based on the browser application, the electronic device 100 may display the browser application window 451. Based on the notes application, the electronic device 100 may display the notes application window 431. Based on the desktop application, the electronic device 100 may display the desktop, namely, the user interface 450 (for display content of the desktop, refer to the user interface 410 shown in FIG. 4A).

In a possible implementation, because the browser application is the guest-side app in the electronic device 100, the guest OS may perform rendering according to a rendering instruction of the browser application and perform composition, to obtain display data of the browser application window 451.

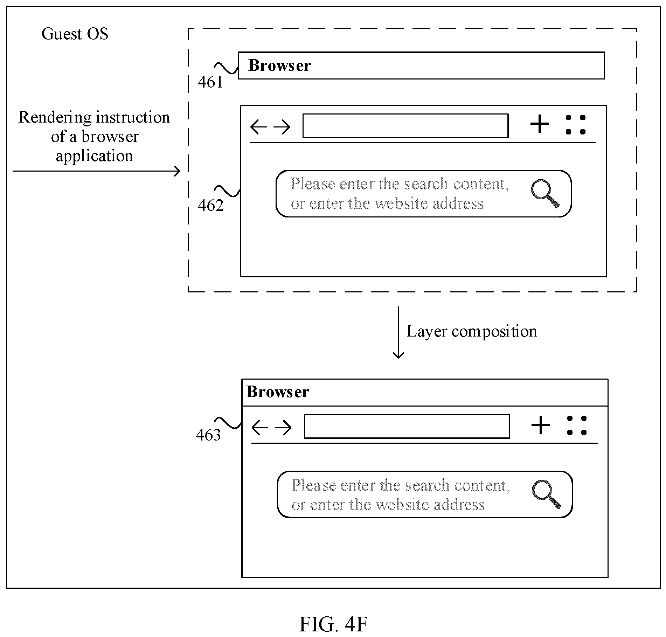

As shown in FIG. 4F, the browser application may send the rendering instruction in a running process. The rendering instruction may be used to draw the browser application window 451. The guest OS may perform rendering according to the rendering instruction of the browser application, to generate one or more layers corresponding to the browser application window 451.

For example, the browser application window 451 includes two layers: a layer 461 and a layer 462. The layer 461 may be used to display a title bar, to indicate information like a name of the browser application. The layer 462 may be used to display controls such as a website input box and a search box of the browser application. The layer included in the browser application window 451 is not limited in embodiments of this application.

The guest OS may perform layer composition based on layer location information and layer level information of the layer 461 and the layer 462 to obtain a layer 463. The layer 463 may indicate the display data of the browser application window 451. The display data may include pixel data of points in the browser application window 451.

The guest OS may send a handle corresponding to the composed layer 463 and window information of the browser application window 451 to the host OS, so that the host OS can display the browser application window 451 on the display. The layer 463 may be stored in the graphics memory of the electronic device 100. The handle corresponding to the layer 463 may indicate a storage location of the layer 463 in the graphics memory. The host OS may obtain the layer 463 from the graphics memory based on the handle corresponding to the layer 463. The window information of the browser application window 451 may include window location information, window size information, and window level information of the browser application window 451 displayed on the display.

The guest OS may further perform rendering according to the rendering instruction of the videos application, to generate the layers corresponding to the videos application window 432, and compose the layers corresponding to the videos application window 432. For a method in which the guest OS performs rendering according to the rendering instruction of the videos application and perform composition, to obtain the display data of the videos application window 432, refer to the descriptions of the embodiment shown in FIG. 4C.

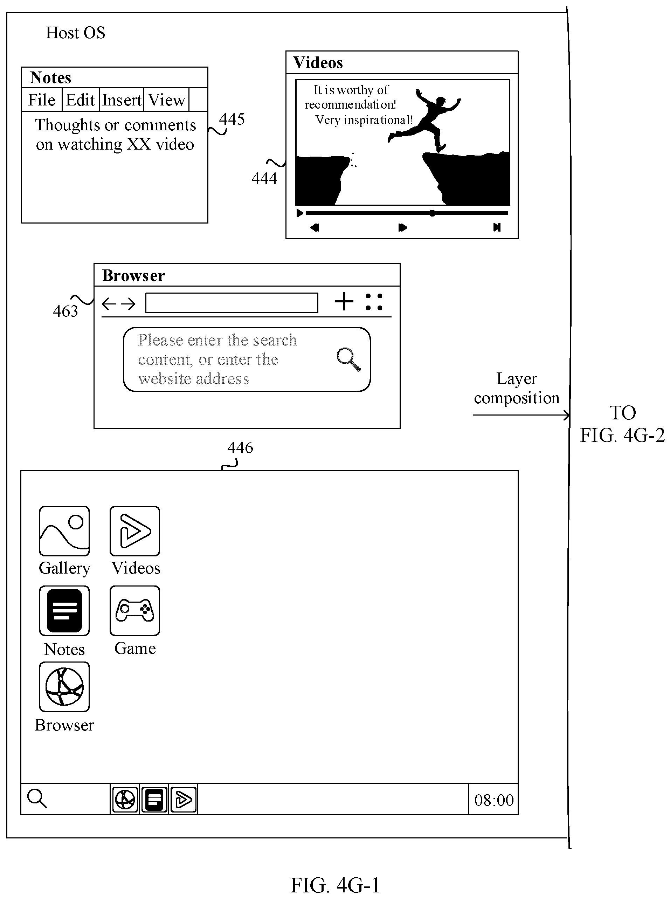

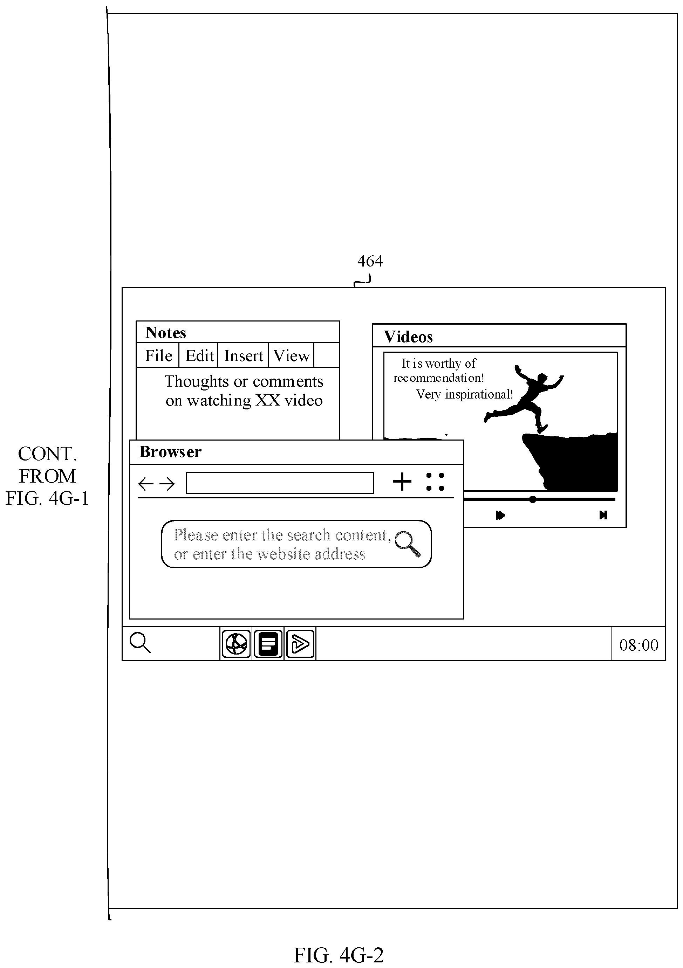

As shown in FIG. 4G-1, the host OS may obtain the layer 444, the layer 445, the layer 446, and the layer 463. For a method for obtaining the layer 444, the layer 445, and the layer 446, refer to the descriptions of the embodiment shown in FIG. 4D-1 and FIG. 4D-2. Then, the host OS may compose the layer 444, the layer 445, the layer 446, and the layer 463 based on the window information of the guest-side apps (such as the browser application and the videos application) and the window information of the host-side apps (such as the notes application and the desktop application), to obtain a layer 464 shown in FIG. 4G-2. The layer 464 may indicate display data of an interface obtained after the application window of the guest-side app and the application window of the host-side app are composed. The host OS may display on the display based on the display data corresponding to the layer 464. In this way, the electronic device 100 can display, on the display, display content shown in FIG. 4E.

In some embodiments, after the guest OS performs rendering according to the rendering instructions of the videos application and the browser application and perform composition, to obtain the composed layer (refer to the layer 444 shown in FIG. 4G-1) of the videos application window and the composed layer (refer to the layer 463 shown in FIG. 4G-1) of the browser application window, the guest OS may compose the layer 444 and the layer 463. Then, the host OS may obtain the display data of the layer 444 and the layer 463 that are composed. The host OS may compose the composed layers (the layer 445 and the layer 446 shown in FIG. 4G-1) of the application windows in the host OS with the layer 444 and the layer 463 that are composed, to display the application window of the host-side app and the application window of the guest-side app on the display.

For the display content of the layer 444 and the layer 463 that are composed, refer to the display content of the videos application window 432 and the browser application window 451 shown in FIG. 4E. Because the host OS obtains the layer 444 and the layer 463 that are composed for display, the videos application window 432 and the browser application window 451 may be located at a same display layer on the display. For example, in FIG. 4E, if display levels of the videos application window 432 and the browser application window 451 are above a display level of the notes application window 431, the videos application window 432 and/or the browser application window 451 may block the notes application window 431. If the display level of the notes application window 431 is above the display levels of the videos application window 432 and the browser application window 451, the notes application window 431 may block the videos application window 432 and/or the browser application window 451.

It can be learned from the scenarios shown in FIG. 4A to FIG. 4G-1 and FIG. 4G-2 that, in the electronic device 100 in which the plurality of operating systems are simultaneously run, when the guest-side app needs to display the application window, the guest OS may render and compose the display content of the application window according to the rendering instruction of the app. The guest only needs to send, to the host OS, the window information and the handle used to index the display data of the application window, and does not need to send a large quantity of rendering instructions to the host OS. In the foregoing embodiments, a speed of drawing a frame of image by the electronic device 100 can be improved, so that the guest-side app in the electronic device 100 can support a high refresh rate during running. The refresh rate of the guest-side app during running can achieve or approach running effect of the host-side app. This can effectively improve screen viewing experience of the user when using the guest-side app.

The following uses an example in which the guest OS is Android^{®} and the host OS is HarmonyOS^{®} to describe a method for performing rendering and composition by the guest OS provided in this application.

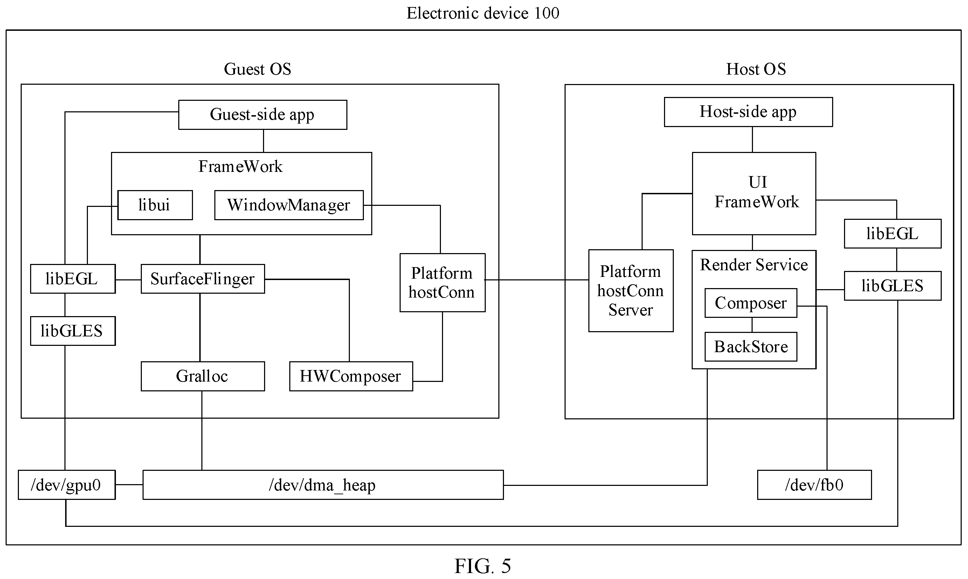

**FIG. 5** **is a diagram of an example of a structure of an electronic device 100.**

As shown in FIG. 5, the electronic device 100 may include a guest OS and a host OS. The electronic device 100 may further include hardware such as /dev/gpu0, /dev/dma_heap, and /dev/fb0. /dev/gpu0 may indicate a rendering device of the electronic device 100. /dev/dma_heap may indicate a graphics memory of the electronic device 100. /dev/fb0 may indicate a display device of the electronic device 100. The guest OS and the host OS may share the rendering device and the graphics memory of the electronic device 100.

The guest OS may include a guest-side app, FrameWork, libEGL, libGLES, SurfaceFlinger, Platform hostConn, Gralloc, and HWComposer. The guest-side app may belong to an application layer of the guest OS. FrameWork may be an application framework layer of the guest OS. libEGL, libGLES, SurfaceFlinger and Platform hostConn may belong to a system library of the guest OS. Gralloc and HWComposer may belong to a hardware abstraction layer (hardware abstraction layer) of the guest OS. The layers in the guest OS may communicate with each other through a software structure. In addition to the layered architecture, the guest OS may alternatively use another software system architecture.

The guest-side app may include one or more apps that can be run on the guest OS. A type of the guest-side app is not limited in embodiments of this application.

FrameWork provides an application programming interface (application programming interface, API) and a programming framework for the guest-side app in the guest OS. FrameWork may include some predefined functions.

As shown in FIG. 5, FrameWork may include libui and a window manager (WindowManager).

libui may be a local framework of a graphics library of Android^{®}. libui may be used to provide frameworks such as a surface framework, an event processing framework, a camera output, and overlay display, and is a hub of a graphical user interaction system.

WindowManager may be configured to manage a window program. WindowManager may obtain a size of a display of the electronic device 100, determine whether there is a status bar, lock a screen, take a screenshot, or the like. WindowManager may further determine window information (for example, window location information, window size information, and window level information) of an application window that needs to be displayed when an app is run.

In addition to libui and WindowManager, FrameWork may further include more modules, for example, a resource manager, a notification manager, an activity manager, and the like.

libEGL may be an interface between a rendering API and a native window system. The rendering API may include a three-dimensional graphics processing library (for example, libGLES), a two-dimensional graphics engine (for example, SGL), and the like. libEGL may provide one or more of the following mechanisms: communicating with the native window system in the electronic device 100, querying an available type and configuration of a surface (surface), creating a surface (surface), synchronizing rendering between rendering APIs, and managing rendering resources such as a texture map.

libGLES may be an API configured to specify a standard for three-dimensional graphics processing hardware. The guest OS may invoke libGLES to drive a GPU for graphics rendering. libGLES may send a rendering instruction to the GPU (namely, the rendering device in this application) via a driver, to control a running status of a graphics rendering pipeline status machine, so as to implement the graphics rendering. In addition to libGLES, the guest OS may alternatively perform graphics rendering through another rendering API.

In this application, the rendering device may perform graphics rendering according to the rendering instruction from libGLES, to obtain display data of a layer in an application window. The display data of the layer may be stored in the graphics memory of the electronic device 100.

SurfaceFlinger is a system service in Android^{®}, and may be used to obtain handles of display data of layers in the graphics memory. A handle of display data of a layer may indicate a location of the display data of the layer in the graphics memory. In other words, the handle may be equivalent to address information in the graphics memory.

SurfaceFlinger may also be used to send, to HWComposer, handles of display data of layers included in an application window, to indicate HWComposer to compose the layers included in the application window.

The hardware composer (hardware composer, HWComposer) may be configured to perform layer composition. HWComposer may receive a layer composition instruction and a handle of display data of a to-be-composed layer that are sent by SurfaceFlinger. HWComposer may obtain the display data of the to-be-composed layer from the graphics memory based on the handle of the display data of the to-be-composed layer, and compose the layer. HWComposer may store, in the graphics memory, display data of a layer obtained through composition (namely, a composed layer). HWComposer may send a handle of the display data of the composed layer to Platform hostConn.

Gralloc may be configured to manage the graphics memory. Gralloc may allocate storage space in the graphics memory. For example, Gralloc may divide the graphics memory into one or more graphics buffers (Graphics Buffer). One graphics buffer may be used to store display data of one layer. In other words, address information of one graphics buffer may be indicated by one handle. Display data of a layer stored in a graphics buffer may be obtained through a handle corresponding to the graphics buffer. Gralloc may also release storage space in the graphics memory. For example, when display data of a layer in a graphics buffer is extracted and used for display on the display, Gralloc may release the graphics buffer (that is, delete the data stored in the graphics buffer).

Platform hostConn may be used for communication between the guest OS and the host OS.

The host OS may include a host-side app, UI FrameWork, Platform hostConn Server, Render Service, libEGL and libGLES.

The host-side app may include one or more apps that can be run on the host OS. A type of the host-side app is not limited in embodiments of this application.

UI FrameWork may be a UI framework layer of the host OS. UI FrameWork provides a processing method related to graphics drawing. UI FrameWork may include a graphical control, a page layout, a window management module, and the like.

Platform hostConn Server may be configured for communication between the host OS and the guest OS.

Render Service may be a rendering module in the host OS. Render Service may be used to provide rendering and drawing capabilities of UI FrameWork. For example, Render Service may convert an ArkUI control description into drawing tree information and render an optimal path according to a corresponding rendering strategy. In addition, Render Service may be responsible for a core underlying mechanism for multi-window smoothness and spatial UI sharing.

Render Service may include Composer and BackStore. Composer may be configured to perform layer composition. BackStore may be configured to manage the graphics memory of the electronic device 100. For a function of BackStore, refer to the foregoing descriptions of Gralloc in the guest OS.

For libEGL and libGLES in the host OS, refer to the foregoing descriptions of libEGL and libGLES in the guest OS respectively. Details are not described herein again.

### (1) The guest OS performs graphics rendering.

In the electronic device 100 shown in FIG. 5, the guest-side app may send a rendering instruction to libGLES through libEGL. In another possible implementation, the guest-side app may invoke an interface in libui to determine the rendering instruction, and then send the rendering instruction to libGLES through libEGL. Apps such as a game application and a videos application need to display a large amount of content, and image content changes quickly. These apps need to use a large quantity of rendering instructions to present corresponding game effect and video playing effect. Therefore, the applications such as the game application and the videos application that need the large quantity of rendering instructions for interface drawing may transfer rendering instructions generated by the applications to libGLES. Apps such as a desktop application and a notes application need to display little content, and image content slightly changes. These apps can display corresponding user interfaces without a large quantity of rendering instructions. libui may include some interfaces corresponding to elements such as a graphical control and a page layout, so that the app can reuse the interface to generate a corresponding rendering instruction. Therefore, the applications such as the desktop application and the notes application that do not need the large quantity of rendering instructions for interface drawing may invoke the interface in libui to determine the rendering instruction, and then transfer the rendering instruction to libGLES.

A method for transferring the rendering instruction by invoking libGLES by the guest-side app is not limited in embodiments of this application.

When libEGL receives the rendering instruction, libEGL may send the rendering instruction to libGLES and create a surface (surface) according to the rendering instruction. The surface may be a class used to provide a graphics buffer (Graphics Buffer) for a graphics producer (for example, the rendering API like libGLES). libGLES may obtain the graphics buffer in the graphics memory (namely, /dev/dma_heap) through the surface. Specifically, because Gralloc is configured to manage the graphics memory, libGLES may invoke Gralloc through the surface to obtain the graphics buffer. libGLES may obtain address information of the graphics buffer allocated by Gralloc in the graphics memory. A specific implementation method for creating the surface and obtaining the graphics buffer is not limited in embodiments of this application.

libGLES may send the obtained rendering instruction and the address information of the graphics buffer to the rendering device (namely, /dev/gpu0), to indicate the rendering device to perform graphics rendering in corresponding storage space in the graphics memory. In a possible implementation, libGLES may send the rendering instruction to a driver (for example, a display driver or a GPU driver) configured to control the rendering device. The driver may translate the rendering instruction into an instruction that can be read by the rendering device. Then, the rendering device may perform graphics rendering according to the rendering instruction translated by the driver, and store, in the graphics buffer corresponding to the address information sent by libGLES, display data obtained through rendering. An application window of an app may include a plurality of layers. The rendering device may separately render, according to a rendering instruction of the app, the plurality of layers included in the application window of the app. Display data of one layer may be stored in one graphics buffer.

### (2) The guest OS performs layer composition.

When creating the surface, the application may create a layer in SurfaceFlinger. The layer may be a class used to provide the graphics buffer that stores the display data for a graphics consumer (for example, a module like SurfaceFlinger or HWComposer that processes the display data rendered by the rendering device). SurfaceFlinger may obtain, through the layer, the graphics buffer that stores the display data in the graphics memory.

In a possible implementation, SurfaceFlinger may specifically obtain the address information of the graphics buffer in the graphics memory, to determine a handle corresponding to each graphics buffer. One graphics buffer may correspond to one handle. SurfaceFlinger may send a handle corresponding to a to-be-composed graphics buffer to HWComposer. The to-be-composed graphics buffer may indicate a graphics buffer that stores display data of a to-be-composed layer in an application window. HWComposer may find the corresponding graphics buffer in the graphics memory based on the received handle, and then obtain the display data stored in the graphics buffer. Then, HWComposer may perform layer composition based on the obtained display data. A layer obtained through composition (namely, a composed layer) may indicate display content of an application window. In other words, display data of the composed layer may be used to draw an application window on the display. HWComposer may store the display data of the composed layer in a graphics buffer of the graphics memory, and obtain address information of the graphics buffer that stores the display data of the composed layer, to determine a handle corresponding to the graphics buffer of the composed layer. Gralloc may allocate, in the graphics memory, the graphics buffer used to store the display data of the composed layer. Alternatively, the graphics buffer that stores the display data of the composed layer may be allocated by the host OS. For example, BackStore in the host OS may allocate, in the graphics memory, graphics buffers of application windows to all apps (including the host-side app and the guest-side app) in the electronic device 100. A graphics buffer of an application window may be used to store display data of a composed layer obtained by composing a layer included in the application window. One graphics buffer of an application window may correspond to one handle (which may also be referred to as a window graphics memory handle). The host OS may send, to the guest OS, a window graphics memory handle corresponding to an application window of a guest-side app. Then, the guest OS may store a composed layer of the corresponding application window in the graphics buffer corresponding to the window graphics memory handle. In other words, the handle corresponding to the composed layer of the application window of the guest-side app may be the window graphics memory handle that is in the host OS and that corresponds to the guest-side app.

A specific implementation method in which HWComposer stores the display data of the composed layer in the graphics buffer is not limited in embodiments of this application.

For example, an application window 1 includes a layer 1, a layer 2, and a layer 3. The graphics memory includes three graphics buffers. The three graphics buffers store display data of the layer 1, the layer 2, and the layer 3. SurfaceFlinger may obtain handles corresponding to the three graphics buffers and send the handles corresponding to the three graphics buffers to HWComposer. In this way, HWComposer can obtain the display data of the layer 1, the layer 2, and the layer 3 from the graphics memory based on the handles corresponding to the three graphics buffers, to compose the layer 1, the layer 2, and the layer 3. A composed layer may indicate display content of the application window 1.

It may be understood that a handle corresponding to a graphics buffer of the composed layer may also be referred to as a handle corresponding to the composed layer, or a handle corresponding to display data of the composed layer.

### (3) The host OS sends the application window of the guest-side app for display.

HWComposer in the guest OS may send the handle corresponding to the composed layer to Platform hostConn. WindowManager in the guest OS may determine window information of the application window of the guest-side app. In a possible implementation, the host OS may detect an operation (for example, a drag operation, a tap operation, or a scale operation) on the application window of the guest-side app. These operations may change one or more pieces of window information like a location, a size, and a level of the application window of the guest-side app. The host OS may generate a corresponding operation event based on the operation, and send the operation event to the guest OS via Platform hostConn Server. The guest-side app may obtain the operation event, and invoke WindowManager based on the operation event to determine the window information of the application window of the guest-side app. A method for determining, by the guest OS, the window information of the application window of the guest-side app is not limited in embodiments of this application.

WindowManager may send window information of an application window corresponding to the composed layer to Platform hostConn.

Platform hostConn may send, to Platform hostConn Server in the host OS, the handle corresponding to the composed layer and the window information of the application window corresponding to the composed layer.

The host OS may send the application window of the guest-side app for display based on the handle corresponding to the composed layer and the window information of the application window corresponding to the composed layer in the guest OS.

In a possible implementation, Platform hostConn Server may send, to Composer in the host OS through UI FrameWork, the handle corresponding to the composed layer and the window information of the application window corresponding to the composed layer in the guest OS.

In this way, Composer in the host OS can obtain the handle corresponding to the composed layer and the window information of the application window corresponding to the composed layer in the guest OS.

In addition to the guest-side app, the host-side app may further be run in the electronic device 100. The electronic device 100 may simultaneously display the application window of the guest-side app and an application window of the host-side app on the display. Regardless of the application window of the guest-side app or the application window of the host-side app, all application windows displayed on the display of the electronic device 100 may have a level relationship. An application window at an upper level may block an application window at a lower level. For example, the level of the browser application window 451 shown in FIG. 4E is above the level of the videos application window 432. The browser application window 451 partially blocks the videos application window 432. The window information of the application window corresponding to the composed layer in the guest OS may include window level information, window location information, and window size information. The window level information may indicate a display level, in all application windows displayed on the display, of the application window corresponding to the composed layer in the guest OS. The window location information may indicate a display location, on the display, of the application window corresponding to the composed layer in the guest OS. The window size information may indicate a display size, on the display, of the application window corresponding to the composed layer in the guest OS.

Because the display further includes the application window of the host-side app, the host OS may obtain display data of a composed layer corresponding to the application window of the host-side app and window information of the application window of the host-side app.

In a possible implementation, the host-side app may send a rendering instruction to libGLES through UI FrameWork and libEGL. libGLES in the host OS may send the rendering instruction to the rendering device (namely, /dev/gpu0), to control the rendering device to perform graphics rendering. BackStore in Render Service may manage the graphics memory (namely, /dev/dma_heap), and allocate, in the graphics memory, a graphics buffer used to store display data of the host-side app. After performing graphics rendering according to the rendering instruction of the host-side app, the rendering device may store the display data obtained through rendering in the graphics buffer of the graphics memory. Same as the guest OS, one graphics buffer in the graphics memory may store display data of one layer included in the application window of the host-side app. Then, Composer in Render Service may obtain, from the graphics memory, display data of a layer included in an application window of the host-side app, and perform layer composition. A layer obtained through composition (namely, a composed layer) may indicate display content of an application window of the host-side app.

UI FrameWork in the host OS may determine the window information of the application window of the host-side app. UI FrameWork may send the window information of the application window of the host-side app to Composer. The window information of the application window of the host-side app may include window level information, window location information, and window size information.

In this way, Composer in the host OS can obtain the display data of the composed layer corresponding to the application window of the host-side app and the window information of the application window of the host-side app.

Further, Composer may compose the application window of the host-side app and the application window of the guest-side app. Composing the application windows may specifically indicate composing the composed layers corresponding to the application windows.

Composer may obtain the display data of the composed layer in the guest OS from the graphics memory based on the handle corresponding to the composed layer in the guest OS. Based on the display data of the composed layer in the guest OS, the window information of the application window corresponding to the composed layer in the guest OS, the display data of the composed layer corresponding to the application window of the host-side app, and the window information of the application window of the host-side app, Composer may compose the application window of the host-side app and the application window of the guest-side app, to obtain a frame of image finally presented on the display. Display data of the frame of image may include pixel data of points on the display. Composer may send the display data of the frame of image to the display device (namely, /dev/fb0) in the electronic device 100. The display device may display the display data of the frame of image on the display of the electronic device 100. In this way, the electronic device 100 displays the application window of the host-side app and the application window of the guest-side app on the display.

In some embodiments, when the frame of image is displayed on the display, Composer may further send, to the display device, display data of a next frame of image obtained by composing application windows of the host-side app and the guest-side app. In this way, after completing refresh of a frame of image, the display can start to refresh a next frame of image based on the display data in the display device.

In some embodiments, in a scenario in which a plurality of guest-side apps are run and application windows need to be displayed, the guest OS may separately render and compose the application windows of the plurality of guest-side apps, to obtain a plurality of composed layers corresponding to the application windows of the plurality of guest-side apps. The guest OS may send the plurality of composed layers to the host OS. Then, the host OS may display the application windows of the plurality of guest-side apps based on the plurality of composed layers. For example, the guest OS may render and compose a layer included in an application window 1 of a guest-side app 1, to obtain a composed layer 1. The guest OS may render and compose a layer included in an application window 2 of a guest-side app 2, to obtain a composed layer 2. The guest OS may send a handle corresponding to the composed layer 1 and a handle corresponding to the composed layer 2 to the host OS. The guest OS may further send application window information of the guest-side app 1 and the guest-side app 2 to the host OS. The host OS may separately obtain display data of the composed layer 1 and display data of the composed layer 2 based on the handle corresponding to the composed layer 1 and the handle corresponding to the composed layer 2. Then, the host OS may display the application window 1 and the application window 2 on the display.

The host OS may determine display levels of the application windows of the guest-side app 1, the guest-side app 2, and one or more host-side apps on the display based on the application window information of the guest-side app 1 and the guest-side app 2, and application window information of the one or more host-side apps. For example, the application window 1 of the guest-side app 1 may be located at a top layer. The application window 2 of the guest-side app 2 may be located at a bottom layer. There may be layers corresponding to the application windows of the one or more host-side apps between the level corresponding to the application window 1 and the level corresponding to the application window 2. It can be learned that the composed layers that are of the application windows of the plurality of guest-side apps and that are obtained by the host OS may be independent of each other. In this way, a user can randomly adjust a display level sequence between application windows of the host-side app and the guest-side app on the display. User experience of using the guest-side app can be better consistent with that of using the host-side app.

In some other embodiments, in a scenario in which a plurality of guest-side apps are run and application windows need to be displayed, after obtaining a plurality of composed layers corresponding to the application windows of the plurality of guest-side apps, the guest OS may compose the plurality of composed layers to obtain a final composed layer. HWComposer in the guest OS may obtain window information like window location information, window size information, and local level information of the application windows of the plurality of guest-side apps. Window location information of an application window of a guest-side app may indicate a display location of the window on the display. Window size information of an application window of a guest-side app may indicate a display size of the window on the display. Local level information of an application window of a guest-side app may indicate a display level of the window in the application windows of the plurality of guest-side apps. HWComposer may compose the plurality of composed layers based on the plurality of composed layers corresponding to the application windows of the plurality of guest-side apps, the window location information, the window size information, and the local layer information. The final composed layer may indicate display data of the plurality of application windows on the display. The guest OS may store the final composed layer in the graphics memory, and send a handle of the final composed layer to the host OS. The host OS may obtain the final composed layer from the graphics memory based on the received handle. The host OS may display the application windows of the plurality of guest-side apps on the display based on the final composed layer.

It may be understood that the guest OS and the host OS shown in FIG. 5 may further include more or fewer modules. This is not limited in embodiments of this application.

As shown in FIG. 5, when the guest-side app is run, passthrough driving of graphics rendering can be implemented in one process through app→libEGL→libGLES→/dev/gpu0→
/dev/dma_heap. Then, the guest OS may compose the layer obtained through rendering, and send, to the host OS, the handle corresponding to the composed layer, so that the host OS sends the handle for display. In the foregoing embodiments, a process in which the guest OS transmits the large quantity of rendering instructions to the host OS when running the guest-side app, and then the host OS performs rendering, composition, and display according to the rendering instructions of the guest-side app can be avoided. Because a data amount of the handle that corresponds to the composed layer and that is transmitted by the guest OS is far less than a data amount of the rendering instruction transmitted by the guest OS, the host OS can obtain the display data of the composed layer of the application window of the guest-side app more quickly. In this way, the electronic device can increase a speed of drawing a frame of image including the application window of the guest-side app, so that the guest-side app can support a high refresh rate during running. The refresh rate of the guest-side app during running can achieve or approach running effect of the host-side app. This improves screen viewing experience of the user when using the guest-side app.

The following uses an example in which the guest OS is Linux^{®} and the host OS is HarmonyOS^{®} to describe a method for performing rendering and composition by the guest OS provided in this application.

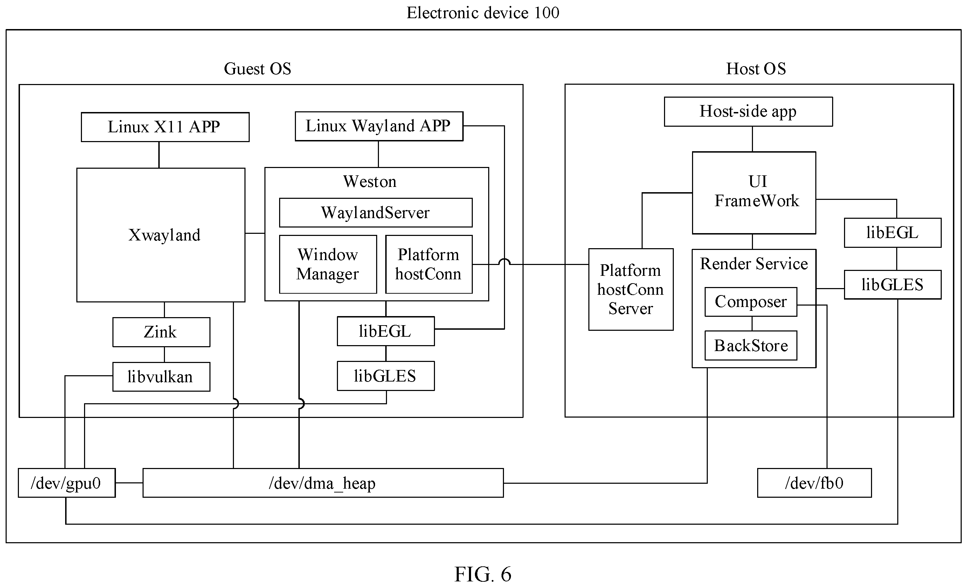

**FIG. 6** **is a diagram of an example of a structure of another electronic device 100.**

As shown in FIG. 6, the electronic device 100 may include a guest OS and a host OS. The electronic device 100 may further include hardware such as /dev/gpu0 (namely, a rendering device), /dev/dma_heap (namely, a graphics memory), and /dev/fb0 (namely, a display device). For /dev/gpu0, /dev/dma_heap, and /dev/fb0, refer to the descriptions in the foregoing embodiments. Details are not described herein again. The guest OS and the host OS may share the rendering device and the graphics memory of the electronic device 100.

The guest OS may include Linux X11 APP, Linux Wayland APP, Xwayland, Weston, Zink, libvulkan, libEGL, and libGLES.

The guest OS may simultaneously use two display server protocols: X11 and Wayland. A display server is a program, and may be used to coordinate input and output between an app and another part of the OS, and between hardware and the OS. Based on the display server, the electronic device may provide a graphical manner for a user to use the electronic device. The display server may provide a framework of a graphical environment, so that the user interacts with the app via an input device like a mouse or a keyboard. The display server may communicate with the app through the display server protocol.

The display server protocol X11 describes how to exchange messages between the app and a display. These messages may include a rendering instruction of the app.

The display server protocol Wayland specifies a communication manner between the display server and the app.

Differences between Wayland and X11 are as follows: Wayland specifies that the app is responsible for drawing an application window border and decoration, and the app may directly calculate and draw a buffer of the app through libEGL and some libEGL extension elements specific to Wayland.

Linux X11 APP may indicate an app that uses X11 to implement application running and application window rendering. Linux Wayland APP may indicate an app that uses Wayland to implement application running and application window rendering. Linux X11 APP and Linux Wayland APP can be collectively referred to as guest-side apps. In addition to Linux X11 APP and Linux Wayland APP, the guest-side app may further include another type of app, for example, an app that uses another display server protocol like Mir.

Xwayland may be used to provide a window management service, a layer composition service, and a graphics buffer management service for Linux X11 APP. The window management service may be used to determine window information of an application window of Linux X11 APP, for example, window location information, window size information, and window level information. The layer composition service may be used to obtain and compose a layer included in the application window of Linux X11 APP, to obtain a composed layer corresponding to the application window of Linux X11 APP. The graphics buffer management service may be used to allocate a graphics buffer to Linux X11 APP in the graphics memory of the electronic device 100. The graphics buffer may be used to store display data of the layer included in the application window.

In some embodiments, Xwayland may provide X server in Wayland, so that Linux X11 APP can be run seamlessly in Wayland.

Zink is a new virtual driver of OpenGL based on libvulkan, and provides OpenGL support based on a hardware driver of libvulkan. Zink provides an interface between Xwayland and libvulkan.

libvulkan may be a cross-platform two-dimensional and three-dimensional drawing application API. The guest OS may invoke libvulkan to drive a GPU for graphics rendering. libGLES may send a rendering instruction to the GPU (namely, the rendering device in this application) via a driver, to implement the graphics rendering.

Weston is an implementation of a Wayland composer. The Wayland composer may indicate the display server that implements the Wayland display server protocol. In addition to Weston, the Wayland composer may alternatively be any one of the following implementations: Mutter, KWin, and Enlightenment. An implementation of the Wayland composer is not limited in embodiments of this application.

Weston may include WaylandServer, WindowManager, and Platform hostConn. WaylandServer may be configured to communicate with Linux Wayland APP, for example, receive a rendering instruction of Linux Wayland APP. WindowManager may be configured to provide a window management service for Linux Wayland APP. Platform hostConn may be used to provide a service for communication between the guest OS and the host OS.

Weston may further include modules such as a layer composition module and a graphics buffer management module. The layer composition module may be configured to provide a layer composition service for Linux Wayland APP. The graphics buffer management module may be configured to provide a graphics buffer management service for Linux Wayland APP.

For libEGL and libGLES shown in FIG. 6, refer to the descriptions of libEGL and libGLES in the guest OS in the embodiment in FIG. 5 respectively. For modules included in the host OS shown in FIG. 6 and functions of the modules, refer to the descriptions of the host OS in the embodiment in FIG. 5. Details are not described herein again.

### (1) The guest OS performs graphics rendering.

In the electronic device 100 shown in FIG. 6, Linux X11 APP may send a rendering instruction to libvulkan through Xwayland and Zink. In a possible implementation, when Xwayland receives the rendering instruction of Linux X11 APP, Xwayland transmits the rendering instruction to Zink, and may allocate a graphics buffer in the graphics memory to Linux X11 APP according to the rendering instruction. A quantity of graphics buffers may be determined by a quantity of layers included in the application window of Linux X11 APP. For example, the application window of Linux X11 APP includes n1 layers, where n1 is a positive integer. In this case, Xwayland may allocate n1 graphics buffers in the graphics memory to Linux X11 APP. One graphics buffer may store display data of one layer. Xwayland may send, to libvulkan through Zink, address information of the graphics buffer that is allocated to Linux X11 APP and that is in the graphics memory.

libvulkan may send the obtained rendering instruction and the address information of the graphics buffer to the rendering device, to indicate the rendering device to perform graphics rendering in the graphics buffer corresponding to the address information in the graphics memory. In a possible implementation, libvulkan may send the rendering instruction to a driver (for example, a display driver or a GPU driver) configured to control the rendering device. The driver may translate the rendering instruction into an instruction that can be read by the rendering device. Then, the rendering device may perform graphics rendering according to the rendering instruction translated by the driver, and store, in the graphics buffer corresponding to the address information sent by libvulkan, display data obtained through rendering.

In the electronic device 100 shown in FIG. 6, Linux Wayland APP may send a rendering instruction to libGLES through Weston and libEGL. Optionally, Linux Wayland APP may alternatively directly send the rendering instruction to libGLES through libEGL. In a possible implementation, Weston may allocate a graphics buffer in the graphics memory to Linux Wayland APP. Weston may send, to libGLES through libEGL, address information of the graphics buffer that is allocated to Linux Wayland APP and that is in the graphics memory.

libGLES may send the obtained rendering instruction and the address information of the graphics buffer to the rendering device, to indicate the rendering device to perform graphics rendering in corresponding storage space in the graphics memory. In a possible implementation, libGLES may send the rendering instruction to a driver (for example, a display driver or a GPU driver) configured to control the rendering device. The driver may translate the rendering instruction into an instruction that can be read by the rendering device. Then, the rendering device may perform graphics rendering according to the rendering instruction translated by the driver, and store, in the graphics buffer corresponding to the address information sent by libGLES, display data obtained through rendering. One application window of Linux Wayland APP may include a plurality of layers. The rendering device may separately render, according to a rendering instruction of Linux Wayland APP, the plurality of layers included in the application window of Linux Wayland APP. Display data of one layer may be stored in one graphics buffer.

### (2) The guest OS performs layer composition.

Xwayland may obtain, from the graphics memory, display data of a layer included in an application window of Linux X11 APP, and perform layer composition based on the display data. Xwayland may store, in the graphics memory, display data of a layer obtained through composition (namely, a composed layer).

In a possible implementation, Xwayland may send, to the host OS through Platform hostConn in Weston, a handle corresponding to a graphics buffer that stores the display data of the composed layer. The handle may indicate address information of the graphics buffer in the graphics memory, so that the guest OS can obtain, from the graphics memory, the display data of the composed layer stored in the graphics buffer.

Weston may obtain, from the graphics memory, display data of a layer included in an application window of Linux Wayland APP, and perform layer composition based on the display data. Weston may store, in the graphics memory, display data of a layer obtained through composition (namely, a composed layer).

In a possible implementation, Weston may send, to the host OS through Platform hostConn, the handle corresponding to the graphics buffer that stores the display data of the composed layer. The handle may indicate address information of the graphics buffer in the graphics memory, so that the guest OS can obtain, from the graphics memory, the display data of the composed layer stored in the graphics buffer.

The handle corresponding to the graphics buffer that stores the display data of the composed layer may be briefly referred to as a handle corresponding to the composed layer.

### (3) The host OS sends the application window of the guest-side app for display.

In a possible implementation, Xwayland may further determine window information of the application window of Linux X11 APP, and send the window information to the host OS through Platform hostConn in Weston. Weston may determine the window information of the application window of Linux Wayland APP and send the window information to the host OS through Platform hostConn.

The host OS may receive, via Platform hostConn Server, the handle corresponding to the composed layer and the window information of the application window corresponding to the composed layer in the guest OS. The host OS may obtain the display data of the composed layer from a shared memory based on the handle corresponding to the composed layer in the guest OS. The host OS may send the application window of the guest-side app for display based on the display data of the composed layer and the window information of the application window corresponding to the composed layer in the guest OS.

The host OS may further obtain display data of a composed layer corresponding to an application window of a host-side app and window information of the application window of the host-side app. Further, the host OS may compose the application window of the host-side app and the application window of the guest-side app (Linux X11 APP and/or Linux Wayland APP), to obtain a frame of image finally presented on the display.

For a specific implementation in which the host OS sends the application window of the guest-side app for display, refer to the foregoing descriptions of sending the application window of the guest-side app for display in FIG. 5. Details are not described herein again.

As shown in FIG. 6, when the guest-side app is run, passthrough graphics rendering can be implemented in one process through Linux X11 APP→Xwayland→Zink
→libvulkan→/dev/gpu0→/dev/dma_heap or through Linux Wayland APP→Weston→libEGL→
libGLES→/dev/gpu0→/dev/dma_heap. Then, the guest OS may compose the layer obtained through rendering, and send, to the host OS, the handle corresponding to the composed layer, so that the host OS sends the handle for display. In the foregoing embodiments, a process in which the guest OS transmits a large quantity of rendering instructions to the host OS when running the guest-side app, and then the host OS performs rendering, composition, and display according to the rendering instructions of the guest-side app can be avoided. Because a data amount of the handle that corresponds to the composed layer and that is transmitted by the guest OS is far less than a data amount of the rendering instruction transmitted by the guest OS, the host OS can obtain the display data of the composed layer of the application window of the guest-side app more quickly. In this way, the electronic device can increase a speed of drawing a frame of image including the application window of the guest-side app, so that the guest-side app can support a high refresh rate during running. The refresh rate of the guest-side app during running can achieve or approach running effect of the host-side app. This improves screen viewing experience of the user when using the guest-side app.

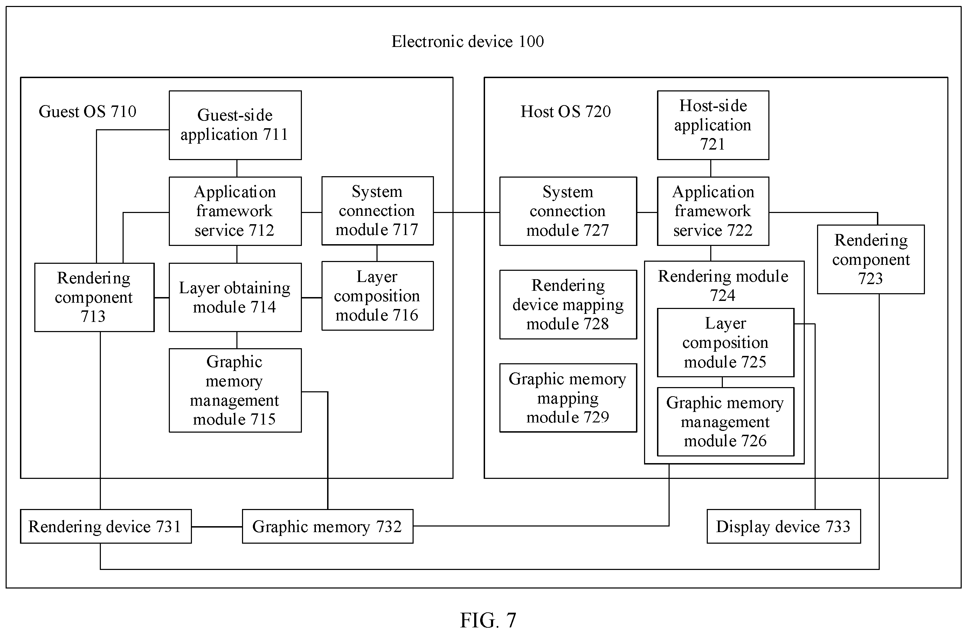

**FIG. 7** **is a diagram of an example of a structure of another electronic device 100 according to an embodiment of this application.**

As shown in FIG. 7, the electronic device 100 may include a guest OS 710 and a host OS 720. The electronic device 100 may further include hardware devices such as a rendering device 731, a graphics memory 732, and a display device 733.

The guest OS 710 may include a guest-side application 711, an application framework service 712, a rendering component 713, a layer obtaining module 714, a graphics memory management module 715, a layer composition module 716, and a system connection module 717.

The guest-side application 711 may include one or more apps that can be run on the guest OS 710.

The application framework service 712 may be used to provide an API and a programming framework for the guest-side application 711. For example, the application framework service 712 may provide services such as a window management service, a resource management service, a notification management service, and an activity management service. The window management service may be used to determine window information (for example, window location information, window size information, and window level information) of an application window of the guest-side application 711.

The rendering component 713 may include a rendering API (for example, libGLES or libvulkan), and may be configured to provide a graphics rendering function. The rendering component 713 may indicate, according to a rendering instruction of the guest-side application 711, the rendering device 731 to perform graphics rendering, to obtain display data of a layer included in the application window of the guest-side application 711.

The graphics memory management module 715 may be configured to manage the graphics memory 732. In some embodiments, the graphics memory management module 715 may include Gralloc shown in FIG. 5. In a case in which rendering needs to be performed on the layer included in the application window of the guest-side application 711, the graphics memory management module 715 may allocate a graphics buffer in the graphics memory 732 to the guest-side application 711. One graphics buffer may be used to store display data of one layer.

The layer obtaining module 714 may be configured to: obtain address information of graphics buffers that are in the graphics memory 732 and that store display data of layers, and send the address information of the graphics buffers to the layer composition module 716, to indicate the layer composition module 716 to compose the display data of the layers stored in the graphics buffers. In some embodiments, the layer obtaining module 714 may include SurfaceFlinger shown in FIG. 5.

The layer composition module 716 may be configured to obtain, from the graphics memory 732 based on the address information of the graphics buffers sent by the layer obtaining module 714, the display data of the layers stored in the graphics buffers. The layer composition module 716 may perform layer composition based on the obtained display data of the layer. The layer composition module 716 may store display data of a composed layer in the graphics memory 732. A graphics buffer that is in the graphics memory 732 and that is used to store the display data of the composed layer may be allocated by the graphics memory management module 715.

The layer composition module 716 may send a handle corresponding to the composed layer to the system connection module 717. The handle corresponding to the composed layer may indicate address information of the graphics buffer that stores the display data of the composed layer in the graphics memory 732, and may be used to find the display data of the composed layer in the graphics memory 732. In some embodiments, the layer composition module 716 may include HWComposer shown in FIG. 5.

The system connection module 717 may be configured for communication between the guest OS 710 and the host OS 720.

The host OS 720 may include a host-side application 721, an application framework service 722, a rendering component 723, a rendering module 724, a system connection module 727, a rendering device mapping module 728, and a graphics memory mapping module 729.

The rendering device mapping module 728 may be configured to map the rendering device 731 to the guest OS 710 based on a virtualization technology.

The graphics memory mapping module 729 may be configured to map the graphics memory 732 to the guest OS 710 based on the virtualization technology.

In addition to the rendering device mapping module 728 and the graphics memory mapping module 729, the host OS 720 may further include mapping modules of more hardware devices.

In some embodiments, the host OS 720 may include a hardware device mapping module. The hardware device mapping module may be used by the host OS 720 to map one or more hardware devices (such as the rendering device 731 and the graphics memory 732) in the electronic device 100 to the guest OS 710.

An existence form of the rendering device mapping module 728 and the graphics memory mapping module 729 is not limited in embodiments of this application.

When the host OS 720 maps the rendering device 731 and the graphics memory 732 to the guest OS 710, the guest OS 710 and the host OS 720 may jointly use the rendering device 731 and the graphics memory 732.

The host-side application 721 may include one or more apps that can be run on the host OS 720.

For the application framework service 722 and the rendering component 723, refer to the foregoing descriptions of the application framework service 712 and the rendering component 713 in the guest OS 710 respectively. Details are not described herein again.

The rendering module 724 may be configured to provide rendering and drawing capabilities. The rendering module 724 may determine display data of points on the display of the electronic device 100, to send application windows of the guest-side application 711 and the host-side application 721 to the display for display.

The rendering module 724 may include a layer composition module 725 and a graphics memory management module 726. The graphics memory management module 726 may be configured to manage the graphics memory 732. In some embodiments, the graphics memory management module 726 may include BackStore shown in FIG. 5. In a case in which rendering needs to be performed on a layer included in the application window of the host-side application 721, the graphics memory management module 726 may allocate a graphics buffer in the graphics memory 732 to the host-side application 721.

The layer composition module 725 may obtain, from the graphics memory 732, display data of the layer included in the application window of the host-side application 721, and perform layer composition, to obtain display data of a composed layer corresponding to the application window of the host-side application 721. Based on the display data of the composed layer corresponding to the application window of the host-side application 721, window information of the application window of the host-side application 721, the display data of the composed layer corresponding to the application window of the guest-side application 711, and the window information of the application window of the guest-side application 711, the layer composition module 725 may further compose the application windows of the host-side application 721 and the guest-side application 711, to obtain a frame of image finally presented on the display.

In some embodiments, the rendering module 724 may include Composer shown in FIG. 5.

The layer composition module 725 may send, to the display device 733, display data of the image obtained by composing the application windows. Then, the electronic device 100 may refresh the image on the display frame by frame based on the display data in the display device 733.

In some embodiments, when the guest OS 710 is Linux^{®}, the application framework service 712, the layer obtaining module 714, the graphics memory management module 715, and the layer composition module 716 may be located in Xwayland or Weston shown in FIG. 6.

It may be understood that the structure shown in FIG. 7 does not constitute a specific limitation on the electronic device 100. In some other embodiments of this application, the electronic device 100 may include more or fewer modules than those shown in FIG. 7, a combination of some modules, or splits from some modules, or a different module layout.

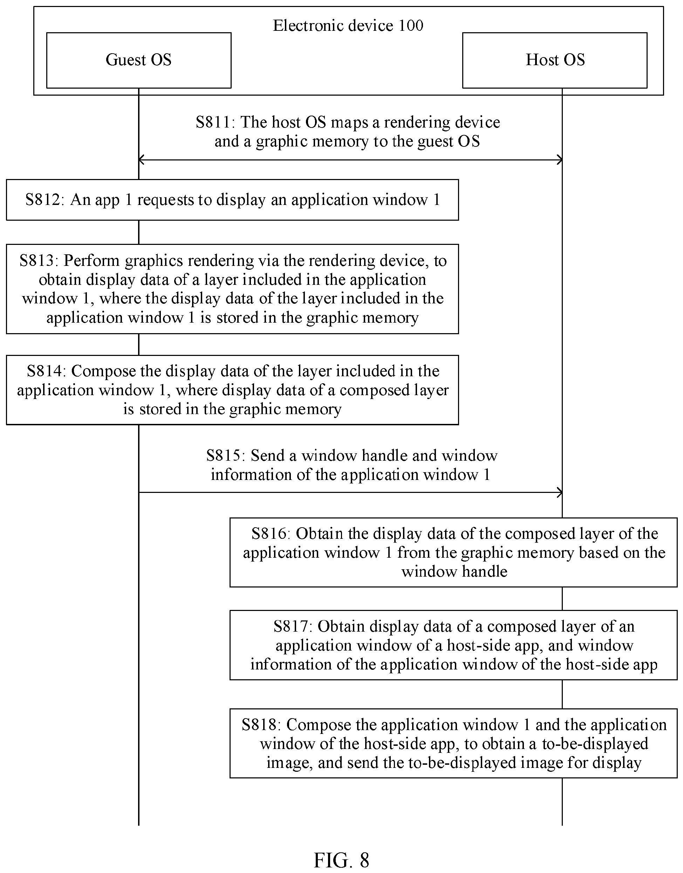

**FIG. 8** **is a flowchart of an example of a graphics display method according to an embodiment of this application.**

As shown in FIG. 8, the graphics display method may be applied to an electronic device 100 including a guest OS and a host OS, and may include steps S811 to S818.

S811: The host OS maps a rendering device and a graphics memory to the guest OS.

For the foregoing method for mapping the rendering device and the graphics memory to the guest OS, refer to the descriptions of the virtualization technology in the foregoing embodiments.

S812: An app 1 in the guest OS requests to display an application window 1.

In response to an operation of starting the app 1, the electronic device 100 may run the app 1. The app 1 may display the application window 1 on a display in a running process. For example, the app 1 is the videos application shown in FIG. 4A. The application window 1 may be the videos application window 432 shown in FIG. 4B.

S813: The guest OS performs graphics rendering via the rendering device, to obtain display data of a layer included in the application window 1, where the display data of the layer included in the application window 1 is stored in the graphics memory.

For example, the application window 1 is the videos application window 432 shown in FIG. 4B. In this case, the application window 1 may include the layer 441, the layer 442, and the layer 443 shown in FIG. 4C. The guest OS may perform graphics rendering by using a passthrough rendering path shown in FIG. 7: the guest-side application 711→the rendering component 713→the rendering device 731→the graphics memory 732, to obtain the display data of the layer 441, the layer 442, and the layer 443. The guest OS may allocate a plurality of graphics buffers in the graphics memory. One graphics buffer may be used to store display data of one layer.

S814: The guest OS composes the display data of the layer included in the application window 1, where display data of a composed layer is stored in the graphics memory.

An example in which the application window 1 is the videos application window 432 shown in FIG. 4B is still used for description. The guest OS may compose the layer 441, the layer 442, and the layer 443 based on the display data of the layer 441, the layer 442, and the layer 443 stored in the graphics memory. The composed layer may be, for example, the layer 444 described in FIG. 4C. The composed layer may indicate display content of the application window 1.

In a possible implementation, the guest OS may allocate a graphics buffer in the graphics memory, to store display data of the composed layer corresponding to the application window 1.

S815: The guest OS sends a window handle and window information of the application window 1 to the host OS.

The window handle of the application window 1 may indicate address information, in the graphics memory, of the graphics buffer that stores the display data of the composed layer corresponding to the application window 1, and may be used to obtain, in the graphics memory, the display data of the composed layer corresponding to the application window 1.

The window information of the application window 1 may include window location information, window level information, window size information, and the like of the application window 1.

In some embodiments, the window handle and the window information of the application window 1 may be sent by the guest OS to the host OS at different moments. For example, after the app 1 requests to display the application window 1 (namely, step S812), in addition to performing step S813, the guest OS may further determine the window information of the application window 1, and send the window information of the application window 1 to the host OS. When the composed layer of the application window 1 is obtained, the guest OS may send the window handle of the application window 1 to the host OS.

In some embodiments, the graphics buffer in which the guest OS stores the display data of the composed layer in the graphics memory may be allocated by the host OS. The host OS may send a handle of the graphics buffer to the guest OS. After obtaining the display data of the composed layer, the guest OS may store the display data of the composed layer in the graphics buffer corresponding to the handle sent by the host OS. Then, the host OS may obtain the display data of the composed layer of the application window 1 from the corresponding graphics buffer based on the handle sent to the guest OS. In this way, the guest OS can need to send only the window information of the application window 1 to the host OS, and does not need to send the window handle of the application window 1.

S816: The host OS obtains the display data of the composed layer of the application window 1 from the graphics memory based on the window handle.

S817: The host OS obtains display data of a composed layer of an application window of a host-side app, and window information of the application window of the host-side app.

The host OS may determine host-side apps that are running and that need to display application windows on the display, and obtain display data of composed layers of the application windows of the host-side apps and window information of the application windows of the host-side apps.

For example, the host-side apps that are running and that need to display the application windows on the display may include the notes application and the desktop application shown in FIG. 4A. The host OS may obtain the display data of the composed layer of the notes application window 431 shown in FIG. 4B, the window information of the notes application window 431, the display data of the composed layer of the desktop (for example, the user interface 410 shown in FIG. 4A), and the window information of the desktop.

For an implementation method for rendering and composing, by the host OS, the layer of the application window of the host-side app, refer to the descriptions of the embodiment shown in FIG. 5.

S818: The host OS composes the application window 1 and the application window of the host-side app, to obtain a to-be-displayed image, and sends the to-be-displayed image for display.

The host OS may compose the composed layers corresponding to the application window 1 and the application window of the host-side app.

For example, the application window 1 is the videos application window 432 shown in FIG. 4B. In this case, the composed layer corresponding to the application window 1 may be the layer 444 shown in FIG. 4C. The host-side app includes the notes application and the desktop shown in FIG. 4A. In this case, the composed layers corresponding to the application window of the host-side app may include the layer 445 and the layer 446 shown in FIG. 4D-1. After the host OS performs application window composition, the obtained to-be-displayed image may be the layer 447 shown in FIG. 4D-2. The host OS sends the layer 447 for display, so that the application window 1 and the application window of the host-side app can be displayed on the display.

It can be learned from the method shown in FIG. 8 that, because the host OS maps the rendering device and the graphics memory to the guest OS, the host OS and the guest OS may share the rendering device and the graphics memory. The guest OS may independently perform rendering and composition via the rendering device and the graphics memory, and send, to the host OS, the handle corresponding to the composed layer, so that the host OS sends the handle for display. According to the foregoing method, a process in which the guest OS transmits a large quantity of rendering instructions to the host OS when running the guest-side app, and then the host OS performs rendering, composition, and display according to the rendering instructions of the guest-side app can be avoided. Because a data amount of the handle that corresponds to the composed layer and that is transmitted by the guest OS is far less than a data amount of the rendering instruction transmitted by the guest OS, the host OS may obtain the display data of the composed layer of the application window of the guest-side app more quickly. In this way, the electronic device can increase a speed of drawing a frame of image including the application window of the guest-side app, so that the guest-side app can support a high refresh rate during running. The refresh rate of the guest-side app during running can achieve or approach running effect of the host-side app. This improves screen viewing experience of a user when using the guest-side app.

It may be understood that each user interface described in embodiments of this application is merely an example interface, and does not constitute a limitation on the solutions of this application. In another embodiment, the user interface may use different interface layouts, may include more or fewer controls, and may add or reduce other function options, and provided that the user interface is based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the scope of the technical solutions of embodiments of this application.

## Claims

1. A multi-operating system-based graphics display method, wherein the method is applied to an electronic device running a plurality of operating systems, the plurality of operating systems comprise one host operating system and at least one guest operating system, the host operating system is a first operating system, the at least one guest operating system comprises a second operating system, and the method comprises:
obtaining, by the second operating system, one or more first layers through rendering according to a rendering instruction of a first application, wherein the first application is an application in the second operating system, and the one or more first layers are layers comprised in a first application window of the first application;
composing, by the second operating system, the one or more first layers to obtain a second layer; and
obtaining, by the first operating system, the second layer, and displaying the first application window on a display of the electronic device based on the second layer.

2. The method according to claim 1, wherein the method further comprises:
obtaining, by the first operating system, first window information of the first application window; and
the displaying the first application window on a display of the electronic device based on the second layer specifically comprises:
displaying, by the first operating system, the first application window on the display of the electronic device based on the second layer and the first window information.

3. The method according to claim 2, wherein the first window information comprises first window location information, first window size information, and first window level information.

4. The method according to any one of claims 1 to 3, wherein the electronic device comprises hardware resources: a rendering device and a graphics memory, and
the obtaining, by the second operating system, one or more first layers through rendering according to a rendering instruction of a first application specifically comprises:
obtaining, by the second operating system, the one or more first layers through rendering via the rendering device according to the rendering instruction of the first application, wherein the one or more first layers are stored in the graphics memory.

5. The method according to claim 4, wherein the method further comprises:
determining, by the second operating system, a first memory area from the graphics memory, and storing the second layer in the first memory area; and
sending, by the second operating system, first indication information of the first memory area to the first operating system, wherein the first indication information indicates a location of the first memory area in the graphics memory.

6. The method according to claim 5, wherein the obtaining, by the first operating system, the second layer specifically comprises:
obtaining, by the first operating system, the second layer from the graphics memory based on the first indication information.

7. The method according to claim 4, wherein the method further comprises:
determining, by the first operating system, a second memory area from the graphics memory, and sending second indication information of the second memory area to the second operating system, wherein the second indication information indicates a location of the second memory area in the graphics memory; and
storing, by the second operating system, the second layer in the second memory area based on the second indication information.

8. The method according to claim 1, wherein the method further comprises:
obtaining, by the first operating system, one or more third layers through rendering according to a rendering instruction of a second application, wherein the second application is an application in the first operating system, and the one or more third layers are layers comprised in a second application window of the second application; and
composing, by the first operating system, the one or more third layers to obtain a fourth layer; and
the displaying the first application window on a display of the electronic device based on the second layer specifically comprises:
composing, by the first operating system, the first application window and the second application window based on the second layer and the fourth layer, and displaying, on the display, the first application window and the second application window that are composed.

9. The method according to claim 8, wherein the method further comprises:
obtaining, by the first operating system, first window information of the first application window and second window information of the second application window; and
the composing, by the first operating system, the first application window and the second application window based on the second layer and the fourth layer specifically comprises:
composing, by the first operating system, the first application window and the second application window based on the second layer, the first window information, the fourth layer, and the second window information.

10. The method according to claim 1, wherein the method further comprises:
obtaining, by the second operating system, one or more fifth layers through rendering according to a rendering instruction of a third application, wherein the third application is an application in the second operating system, and the one or more fifth layers are layers comprised in a third application window of the third application;
composing, by the second operating system, the one or more fifth layers to obtain a sixth layer; and
obtaining, by the first operating system, the sixth layer; and
the displaying the first application window on a display of the electronic device based on the second layer specifically comprises:
composing, by the first operating system, the first application window and the third application window based on the second layer and the sixth layer, and displaying, on the display, the first application window and the third application window that are composed.

11. The method according to claim 10, wherein the method further comprises:
obtaining, by the first operating system, first window information of the first application window and third window information of the third application window; and
the composing, by the first operating system, the first application window and the third application window based on the second layer and the sixth layer specifically comprises:
composing, by the first operating system, the first application window and the third application window based on the second layer, the first window information, the sixth layer, and the third window information.

12. An electronic device, wherein the electronic device comprises a rendering device, a graphics memory, a storage, and a processor, wherein the rendering device is configured to perform rendering according to a rendering instruction to obtain display data, the graphics memory is configured to store the display data, the storage is configured to store a computer program, the processor runs a plurality of operating systems, the plurality of operating systems comprise one host operating system and at least one guest operating system, and the processor is configured to invoke the computer program, so that the electronic device performs the method according to any one of claims 1 to 11.

13. A computer-readable storage medium, comprising instructions, wherein when the instructions are run on an electronic device, the electronic device is enabled to perform the method according to any one of claims 1 to 11.

14. A computer program product, wherein the computer program product comprises computer instructions, and when the computer instructions are run on an electronic device, the electronic device is enabled to perform the method according to any one of claims 1 to 11.
